# EUROPÄISCHE PATENTSCHRIFT

(11) **EP 3 723 925 B1**
(45) Veröffentlichungstag und Bekanntmachung des Hinweises auf die Patenterteilung: **28.09.2022**
(21) Anmeldenummer: 18822316.8
(22) Anmeldetag: 12.12.2018
(51) Int. Cl.: B21D 53/84, F16H 53/02

(54) **GEBAUTE NOCKENWELLE, SOWIE VERFAHREN ZUR HERSTELLUNG EINER GEBAUTEN NOCKENWELLE**
ASSEMBLED CAMSHAFT AND METHOD FOR MANUFACTURING AN ASSEMBLED CAMSHAFT
ARBRE À CAMES ASSEMBLÉ ET PROCÉDÉ DE FABRICATION D'UN ARBRE À CAMES ASSEMBLÉ

(30) Priorität: 13.12.2017 DE 102017222605
(43) Veröffentlichungstag der Anmeldung: 21.10.2020
(73) Patentinhaber: thyssenkrupp Dynamic Components TecCenter AG, 9492 Eschen (LI); thyssenkrupp AG, 45143 Essen (DE)
(72) Erfinder: JUNGE, Volker, 38855 Wernigerode (DE)
(74) Vertreter: thyssenkrupp Intellectual Property GmbH
(86) Internationale Anmeldenummer: PCT/EP2018/084464
(87) Internationale Veröffentlichungsnummer: WO 2019/115579

(56) Entgegenhaltungen:
- EP-A1- 0 119 112
- DE-A1- 19 710 847
- JP-A- 2014 077 474
- US-A1- 2006 064 872
- US-A1- 2010 162 976

## Beschreibung

Die vorliegende Erfindung betrifft eine gebaute Nockenwelle und ein Verfahren zur Herstellung einer gebauten Nockenwelle, wobei die Nockenwelle als eine Schiebenockenwelle ausgebildet ist und auf der Grundwelle axial feste Funktionselemente, wie beispielsweise Nocken, sowie axial verschiebbare Nocken aufweist.

### STAND DER TECHNIK

Eine gebaute Nockenwelle zum Einbau in eine Brennkraftmaschine ist aus der DE 10 2011 103 544 A1 bekannt. Bei der darin beschriebenen Nockenwelle weist die Grundwelle eine Außenverzahnung auf, mittels welcher Schiebenockeneinheiten axial auf der Grundwelle geführt werden und drehfest mit der Grundwelle verbunden sind. An der Außenverzahnung befestigte Lagerringe dienen zur Lagerung und Führung der Nockenwelle in der Brennkraftmaschine. Die Lagerelemente werden mittels eines Pressverbandes insbesondere thermisch gefügt. Als nachteilig ist hier jedoch zu betrachten, dass die Lagerringe mit Überdeckung über die Außenverzahnung geschoben werden bzw. beim thermischen Fügen große Temperaturunterschiede auf die Nockenwelle oder die Komponenten einwirken.

Aus der US 2006/064872 A1 ist ferner eine gebaute Nockenwelle für eine Brennkraftmaschine bekannt geworden, bei welcher die Nockenwelle eine Grundwelle und eine sich zumindest abschnittsweise axial entlang der Grundwelle erstreckende Außenverzahnung umfasst, sowie mindestens eine Nabe mit einer Innenverzahnung, welche mit der Außenverzahnung der Grundwelle derart korreliert, dass die Nabe drehfest und axial unverschiebbar mit der Grundwelle verbundenen ist, wobei die Außenverzahnung mindestens einen sich axial zumindest abschnittsweise entlang der Grundwelle erstreckenden Formschlussteilbereich oder einen Kraftschlussteilbereich aufweist, um die Nabe zumindest formschlüssig oder kraftschlüssig anzuordnen, und wobei sich zumindest an den Formschlussteilbereich oder den Kraftschlussteilbereich zumindest ein sich wenigstens abschnittsweise axial entlang der Grundwelle erstreckender Ausrichtbereich zum winkelausrichten der Nabe anschließt.

Weitere Nockenwellen bzw. Verfahren zum Bau einer Nockenwelle sind beispielsweise aus der US 20120/0162976 A1, EP 0 119 112 A1 und DE 197 10 847 A1 bekannt geworden.

### OFFENBARUNG DER ERFINDUNG

Es ist daher die Aufgabe der vorliegenden Erfindung, die voranstehend beschriebenen Nachteile bei einer gebauten Nockenwelle, insbesondere einem Verfahren zur Herstellung einer gebauten Nockenwelle zu beseitigen. Es soll ein Verfahren zur Herstellung einer Nockenwelle sowie eine danach hergestellte Nockenwelle bereitgestellt werden, bei dem kein Temperatureintrag in die axial feste bzw. die axial nicht verschiebbare Nabe erfolgt. Ferner soll ein Verfahren zur Herstellung einer Nockenwelle bereitgestellt werden, bei dem die axial nicht verschiebbare Nabe lediglich auf kurzen Abschnitten über eine Verzahnung der Grundwelle geschoben wird.

Die voranstehende Aufgabe wird gelöst durch eine gebaute Nockenwelle mit den Merkmalen der unabhängigen Ansprüche 1 und 3 sowie durch ein Verfahren zum Herstellen einer gebauten Nockenwelle mit den Merkmalen gemäß der unabhängigen Ansprüche 10 und 11. Weitere Merkmale und Details sowie Ausgestaltungen und Weiterbildungen der Erfindung ergeben sich aus den Unteransprüchen, der Beschreibung und den Zeichnungen. Dabei gelten Merkmale und Details, die im Zusammenhang mit der erfindungsgemäßen Nockenwelle beschrieben sind, selbstverständlich auch im Zusammenhang mit dem erfindungsgemäßen Herstellverfahren und jeweils umgekehrt, so dass bezüglich der Offenbarung zu den einzelnen Erfindungsaspekten stets wechselseitig Bezug genommen wird beziehungsweise werden kann.

Gemäß der Erfindung umfasst die gebaute Nockenwelle für eine Brennkraftmaschine eine Grundwelle mit einer sich zumindest abschnittsweise axial entlang der Grundwelle erstreckenden Außenverzahnung, sowie mindestens eine Nabe mit einer Innenverzahnung, welche mit der Außenverzahnung der Grundwelle derart korreliert, dass die Nabe drehfest und axial unverschiebbar mit der Grundwelle verbundenen ist, wobei die Außenverzahnung mindestens einen sich zumindest abschnittsweise axial entlang der Grundwelle erstreckenden Formschlussteilbereich und den Kraftschlussteilbereich aufweist, um die Nabe zumindest formschlüssig oder kraftschlüssig anzuordnen. Des Weiteren schließt sich an den Formschlussteilbereich oder den Kraftschlussteilbereich zumindest ein sich zumindest abschnittsweise axial entlang der Grundwelle erstreckender Ausrichtbereich an. Dabei weist die Außenverzahnung wenigstens des einen Formschlussteilbereiches und des Kraftschlussteilbereiches Zahnzwischenräume mit wenigstens zwei zueinander unterschiedlichen Fußkreisdurchmessern und die Innenverzahnung der Nabe Zähne mit zumindest zwei mit den unterschiedlichen Fußkreisdurchmessern aufweisenden Zahnzwischenräume der Grundwelle korrelierende und zueinander unterschiedliche Kopfkreisdurchmesser auf, wobei die Kombination von den Zähnen der Innenverzahnung der Nabe mit dem ersten Kopfkreisdurchmesser mit den Zahnzwischenräumen der Außenverzahnung der Grundwelle mit dem zweiten Fußkreisdurchmesser und die Kombination der Zähne der Innenverzahnung der Nabe mit dem zweiten Kopfkreisdurchmesser mit den Zahnzwischenräumen der Außenverzahnung der Grundwelle mit einem ersten Fußkreisdurchmesser einen Schiebesitz ausbildet. Dabei besteht zumindest die Formschlussverbindung oder die Kraftschlussverbindung der Nabe mit der Grundwelle zur axialen Fixierung der Nabe aufgrund einer Kombination von wenigstens dem einen ersten Fußkreisdurchmesser aufweisenden Zahnzwischenraum der Grundwelle und dem einen nicht korrelierenden zweiten Kopfkreisdurchmesser aufweisenden Zahn der Innenverzahnung ausgebildete Pressverbindung. Vorteilhaft wird auf der Grundwelle eine Außenverzahnung ausgebildet und damit eine Möglichkeit geschaffen, verschiedene Naben axial entlang der Grundwelle zu führen und dabei drehfest mit dieser zu verbinden, wie dies beispielsweise bei Schiebenockensystemen der Fall ist. Für die drehfeste Verbindung der Grundwelle mit der Nabe stellt die Verzahnung der Grundwelle mehrere Formschlusselemente zur Ausbildung einer Formschlussverbindung bereit. Mit Vorteil wird im Ausrichtbereich kein Formschluss zwischen der Grundwelle und der Nabe mit ihrer Innenverzahnung ausgebildet, wodurch die Nabe in eine gewünschte Winkellage relativ zur Grundwelle bzw. deren Außenverzahnung gedreht bzw. verdreht werden kann. Mit Vorteil wird im Ausrichtbereich zudem keine Kraftschlussverbindung ausgebildet, wodurch die Winkellage der Nabe mit wenig Kraft und materialschonend (da ohne Reibung oder Materialabtrag) einstellbar ist. Mit Vorteil erstreckt sich der Ausrichtbereich über den gesamten Umfang der Grundwelle, wenigstens jedoch über einen Umfangsteilbereich, um die gewünschte Winkelausrichtung der Nabe relativ zur Außenverzahnung bzw. zur Grundwelle zu ermöglichen. Der Ausrichtbereich kann beispielsweise durch Abschleifen oder Abfräsen der Außenverzahnung ausgebildet werden. Ferner ist es möglich, dass im Ausrichtbereich keine Außenverzahnung auf der Grundwelle ausgebildet wird. Von Vorteil ist, dass bei der Kombination von den Zähnen der Innenverzahnung der Nabe, welche den ersten Kopfkreisdurchmesser aufweisen, mit den Zahnzwischenräumen der Außenverzahnung der Grundwelle, welche den zweiten Fußkreisdurchmesser aufweisen, sowie die Kombination der Zähne der Innenverzahnung der Nabe, welche den zweiten Kopfkreisdurchmesser aufweisen, mit den Zahnzwischenräumen der Außenverzahnung der Grundwelle, welche den ersten Fußkreisdurchmesser aufweisen, ein Schiebesitz zwischen diesen ausgebildet wird. Hierdurchkann vorteilhaft die Nabe über die Außenverzahnung verschoben werden ohne die Außenverzahnung zu beschädigen. Vorteilhafterweise kann die unbeschädigte Außenverzahnung zur drehfesten Anbindung anderer Bauteile oder zur axialen Führung beim Verschieben genutzt werden. Vorteilhafterweise wird zur axialen Fixierung der Nabe auf der Grundwelle die Kombination des einen zweiten Kopfkreisdurchmessers aufweisenden Zahnes der Innenverzahnung und des einen ersten Fußkreisdurchmessers aufweisenden Zahnzwischenraumes der Außenverzahnung genutzt, wodurch die Flanken der Außenverzahnung beim Überschieben der Nabe nicht beschädigt werden. Die dabei ausgebildete Pressverbindung kann zusätzlich zur axialen Fixierung der Nabe, insbesondere auch zur Fixierung gegen deren Verdrehen dienen. Dies kann die Formschlussverbindung mit der Außenverzahnung der Grundwelle ergänzen oder ersetzen.

Die Größenverhältnisse der jeweiligen Durchmesser der Fußkreise der Zahnzwischenräume oder der Kopfkreise der Zähne zueinander, sind bevorzugt wie nachfolgend erläutert ausgebildet. Der erste Durchmesser des Fuß- oder Kopfkreises ist größer als der zweite Durchmesser des jeweiligen Fuß- oder Kopfkreises. Als Basis für die Betrachtung kann die Drehachse der Nockenwelle dienen. So ist verständlicherweise der Kopfkreisdurchmesser der Grundwelle größer als der Fußkreisdurchmesser dieser Verzahnung. Analog sind die beiden Fußkreisdurchmesser der Grundwellenverzahnung relativ zueinander zu betrachten. Dieselbe Bezugsbasis gilt vice versa für die Innenverzahnung der Nabe. Somit ergibt sich, dass der Kopfkreisdurchmesser der Naben-Innenverzahnung kleiner ist als deren Fußkreisdurchmesser. Die entsprechenden Größenbeziehungen der weiteren relevanten Durchmesser entsprechen demselben Schema.

Die axial unverschiebbar zu fixierende Nabe kann beispielsweise ein Sensorgeberrad, ein Nocken zur Betätigung von Ventilen der Brennkraftmaschine oder ein Pumpennocken zur Betätigung einer Kraftstoffpumpe oder einer Vakuumpumpe sein. Es ist jedoch auch denkbar, dass die Nabe als ein gebauter Mehrfachnocken ausgebildet ist. Vorteilhaft ist zudem, dass der Ausrichtbereich für die Nabe mit ihrer Innenverzahnung keinen Formschlussteilbereich oder Kraftschlussteilbereich ausbildet, damit die Nabe in diesem Bereich keine drehfeste Verbindung mit der Grundwelle ausbildet und in ihre benötigte Winkellage gedreht bzw. verdreht werden kann, um dann in entsprechender Winkellage zumindest die Formschlussverbindung oder die Kraftschlussverbindung mit der Grundwelle zur axialen Fixierung der Nabe aufgrund einer zwischen mindestens dem Zahnzwischenraum mit dem ersten Fußkreisdurchmesser der Außenverzahnung der Grundwelle und dem Zahn aufweisend einen nicht korrelierenden zweiten Kopfkreisdurchmesser der Innenverzahnung der Nabe ausgebildeten Pressverbindung auszubilden.

Vorteilhaft kann die Außenverzahnung der Grundwelle beispielsweise als Vielzahnprofil, wie beispielsweise ein Keilwellenprofil oder Zahnnabenprofil mit Evolventenverzahnung ausgeführt sein. Die Außenverzahnung kann aber auch als ein Polygonprofil oder ein ähnliches Unrund ausgebildet sein, welches die drehfeste Fixierung der Nabe auf der Grundwelle beispielsweise in Form eines Kraftschlusses und/oder Formschlusses zur Übertragung eines Drehmomentes zwischen Nabe und Grundwelle sicherstellen kann.

Im Rahmen der Erfindung ist es des Weiteren denkbar, dass die zwei mit den unterschiedlichen Fußkreisdurchmessern aufweisenden Zahnzwischenräume der Grundwelle umlaufend in einander abwechselnder Folge ausgebildet sind. Vorteilhaft ist somit eine Vielzahl von unterschiedlichen Fußkreisdurchmessern vorgesehen, wodurch die axiale Sicherung gegen größere Kräfte ermöglicht wird. Mit Vorteil sind somit zudem die unterschiedlichen Fußkreisdurchmesser der Zahnzwischenräume der Außenverzahnung gleichmäßig über den Umfang verteilt, wodurch sich eine gleichmäßige Krafteinleitung in die Nabe ergibt. Von Vorteil ist dabei die gleichmäßige Dehnung bzw. Formänderung der Nabe. Sollte die Nabe jedoch eine über den Umfang der Grundwelle ungleichmäßige Drehmomenteinleitung bzw. Drehmomentbelastung erfahren, wie dies beispielsweise bei Nocken oder Pumpennocken der Fall ist, ist es jedoch auch denkbar, dass die Zahnzwischenräume mit ihren unterschiedlichen Fußkreisdurchmessern ungleichmäßig über den Umfang, dann beispielsweise an den wirkenden Drehmomentverlauf angepasst, verteilt sind. Damit lässt sich vorteilhaft die axiale Fixierung der Nabe auf der Grundwelle optimieren und die Pressverbindung zwischen Grundwelle und Nabe kann die wechselnden Belastungen besser ertragen.

Es ist des Weiteren eine weitere Ausgestaltung einer gebauten Nockenwelle für eine Brennkraftmaschine beansprucht, wobei die Nockenwelle eine Grundwelle und eine sich zumindest abschnittsweise axial entlang der Grundwelle erstreckende Außenverzahnung umfasst, sowie mindestens eine Nabe mit einer Innenverzahnung, welche mit der Außenverzahnung der Grundwelle derart korreliert, dass die Nabe drehfest und axial unverschiebbar mit der Grundwelle verbundenen ist., Die Außenverzahnung weist mindestens einen sich wenigstens abschnittsweise axial entlang der Grundwelle erstreckenden Formschlussteilbereich oder einen Kraftschlussteilbereich auf, um die Nabe zumindest kraftschlüssig anzuordnen, und wobei die Außenverzahnung des Formschlussteilbereiches oder des Kraftschlussteilbereiches Zähne mit einem Kopfkreisdurchmesser aufweist, und wobei sich an den Formschlussteilbereich oder den Kraftschlussteilbereich zumindest ein sich wenigstens abschnittsweise axial entlang der Grundwelle erstreckender Ausrichtbereich zum Winkelausrichten der Nabe anschließt. Die Zahnzwischenräume der Innenverzahnung der Nabe weisen zumindest zwei unterschiedliche Fußreisdurchmesser auf, wobei der einen ersten Fußkreisdurchmesser aufweisende Zahnzwischenraum der Nabe mit einem Zahn der Grundwelle, welcher den benannten Kopfkreisdurchmesser aufweist, korreliert und einen Schiebesitz ausbildet, und wobei zumindest die Kraftschlussverbindung der Nabe mit der Grundwelle zur axialen Fixierung der Nabe aufgrund einer zwischen dem einen Kopfkreisdurchmesser aufweisenden Zahn der Grundwelle und dem einen nicht korrelierenden zweiten Fußkreisdurchmesser aufweisenden Zahnzwischenraum der Innenverzahnung ausgebildete Pressverbindung besteht. Mit Vorteil weißt somit die Außenverzahnung Zähne mit lediglich einem Kopfkreisdurchmesser und Zahnzwischenräume mit lediglich einem Fußkreisdurchmesser auf, und kann beispielsweise durch Walzen und somit einfach und kostenoptimiert hergestellt werden. Vorteilhaft wird mit dieser Außenverzahnung eine Möglichkeit geschaffen verschiedene Naben axial entlang der Grundwelle zu führen und dabei drehfest und axial unverschieblich mit dieser zu verbinden, wie dies beispielsweise bei Schiebenockensystemen der Fall ist. Mit Vorteil wird auch bei dieser Weiterbildung, wie auch bei den zuvor beschriebenen Ausgestaltungen, im Ausrichtbereich zwischen der Außenverzahnung der Grundwelle und der Nabe mit ihrer Innenverzahnung keine drehfeste Verbindung ausgebildet, wodurch die Nabe in eine gewünschte Winkellage relativ zur Grundwelle bzw. deren Außenverzahnung gedreht bzw. verdreht werden kann. Mit Vorteil erstreckt sich der Ausrichtbereich über den gesamten Umfang der Grundwelle, wenigstens jedoch über einen Umfangsteilbereich, um eine Winkelausrichtung der Nabe relativ zur Außenverzahnung zu ermöglichen. Mit Vorteil wird im Ausrichtbereich zudem keine Kraftschlussverbindung ausgebildet, wodurch die Winkellage der Nabe mit wenig Kraft und Materialschonend (da ohne Reibung oder Materialabtrag) einstellbar ist. Der Ausrichtbereich kann beispielsweise durch Abschleifen oder Abfräsen der Außenverzahnung ausgebildet werden. Ferner ist es möglich, dass im Ausrichtbereich keine Außenverzahnung auf der Grundwelle ausgebildet wird. Von Vorteil ist, dass der einen bzw. die einen ersten Fußkreisdurchmesser aufweisende Zahnzwischenraum bzw. aufweisenden Zahnzwischenräume der Nabe mit dem einen bzw. mit den einen Kopfdurchmesser aufweisenden Zahn bzw. aufweisenden Zähnen der Grundwelle bzw. der einen bzw. die einen Kopfkreisdurchmesser aufweisende Zahn bzw. aufweisenden Zähne der Nabe mit dem einen bzw. mit den einen Fußkreisdurchmesser aufweisenden Zahnzwischenraum bzw. den aufweisenden Zähnen der Grundwelle einen Schiebesitz ausbildet, wodurch die Nabe über die Außenverzahnung verschoben werden kann ohne diese zu beschädigen. Vorteilhafterweise kann die unbeschädigte Außenverzahnung zur drehfesten Anbindung anderer Bauteile oder zur axialen Führung beim Verschieben genutzt werden. Vorteilhafterweise wird zur kraftschlüssigen axialen Fixierung der Nabe der Zahnzwischenraum der Innenverzahnung mit dem nicht korrelierenden zweiten Fußkreisdurchmesser der Innenverzahnung und der Kopfkreisdurchmesser der Außenverzahnung genutzt, wodurch die Flanken der Außenverzahnung beim Überschieben der Nabe nicht beschädigt werden.

Bei einer vorteilhaften Ausgestaltung sind der Formschlussteilbereich und/oder der Kraftschlussteilbereich durch den Ausrichtbereich in wenigstens zwei axial beabstandete Formschlussteilbereiche und/oder Kraftschlussteilbereiche aufgeteilt. Mit Vorteil kann die Nabe durch diese Anordnung bzw. Abfolge der Bereiche und entsprechender Kombination der korrelierenden Durchmesser der Verzahnungen über Bereiche der Außenverzahnung geschoben werden, ohne eine Pressverbindung auszubilden und die Verzahnung zu beschädigen. Erst in unmittelbarer Nähe der Endposition, nach dem Winkelausrichten der Nabe im Ausrichtbereich, wird die Pressverbindung zwischen der Grundwelle und der Nabe ausgebildet. Die Nabe muss somit lediglich über einen kurzen Bereich der Außenverzahnung verschoben werden. Die Kräfte für die Montage bzw. den Verschiebeweg können folglich reduziert und die Gefahr einer Beschädigung der Außenverzahnung minimiert werden.

Bei einer vorteilhaften Weiterbildung der Erfindung erstrecken sich mehrere Formschlussteilbereiche und/oder Kraftschlussteilbereiche und mehrere Ausrichtbereiche einander abwechselnd zumindest abschnittweise in axialer Richtung entlang der Grundwelle. Mit Vorteil ist damit ein Ausrichtbereich näher an der Endposition der Nabe, wobei der Verschiebeweg der Nabe über die Verzahnung mit einem zwischen der Grundwelle und der Nabe ausgebildeten Presssitz reduziert werden kann.

Bei einer anderen bevorzugten Ausgestaltung der Erfindung ist die Innenverzahnung der Nabe mit ihrer axialen Erstreckung in wenigstens zwei Teilbereiche aufgeteilt. Bei entsprechender Auslegung bzw. Dimensionierung der axialen Erstreckung der Nabe mit ihrer Innenverzahnung und der Ausrichtbereiche, kann die Verzahnung der Nabe in die wenigstens zwei Ausrichtbereiche eingeschoben werden Die Innenverzahnung der Nabe ist demzufolge vorteilhaft auf mehrere axial voneinander beabstandete Teilbereiche aufgeteilt. Vorteilhaft können somit die einzelnen Ausrichtbereiche axial kürzer ausgebildet werden, als ein einzelner Ausrichtbereich, der die entsprechende Innenverzahnung der Nabe bei einer Verdrehung aufnehmen soll. Die für andere Naben zur drehfesten Fixierung und zur axialen Führung auf der Grundwelle genutzte Außenverzahnung muss auf diese Weise in diesen Bereichen lediglich auf kleineren Teilstücken unterbrochen werden, wodurch das übertragbare Drehmoment erhöht oder die Kraftverteilung bei Drehmomentübertragung zwischen Welle und Nabe verteilt wird.

Bei einer weiteren bevorzugten erfindungsgemäßen Ausgestaltung weist die Innenverzahnung der Nabe mehr Zähne auf, als die Außenverzahnung der Grundwelle. Vorteilhaft können mehrere Zähne in einen Zahnzwischenraum der Außenverzahnung der Grundwelle eingreifen und die Nabe kann in ihrer Winkelausrichtung in kleineren Schritten winkelausgerichtet auf der Grundwelle fixiert werden.

Bei einer anderen bevorzugten und vorteilhaften Weiterbildung der erfindungsgemäßen Nockenwelle weist diese eine zweite Nabe mit einer einen Kopfkreisdurchmesser und einen Fußkreisdurchmesser aufweisenden Innenverzahnung auf, wobei die Innenverzahnung der Nabe mit der Außenverzahnung der Grundwelle korreliert und einen Schiebesitz aus bildet.

Gemäß dem erfindungsgemäßen Verfahren zur Herstellung einer gebauten Nockenwelle wird eine Grundwelle bereitgestellt, bei der die Oberfläche derart bearbeitet wird, dass auf zumindest einem Teilbereich, eine sich zumindest abschnittsweise axial entlang der Grundwelle erstreckenden Außenverzahnung ausgebildet wird, die für die zumindest eine Nabe mit ihrer Innenverzahnung wenigstens einen Formschlussteilbereich oder einen Kraftschlussteilbereich bereitstellt, um die Verbindung mit der Grundwelle zu gewährleisten. Ferner wird die Außenverzahnung derart ausgebildet, dass sie mehrere Zähne mit einem Zahnzwischenraum aufweist, und der Zahnzwischenraum zwei zueinander unterschiedliche Fußkreisdurchmesser aufweist. Zudem wird bei dem erfindungsgemäßen Verfahren ein Ausrichtbereich auf der Grundwelle ausgebildet, der sich an den Formschlussteilbereich und/oder den Kraftschlussteilbereich axial anschließt und für die Nabe mit ihrer Innenverzahnung keinen Formschlussteilbereich und/oder Kraftschlussteilbereich ausbildet. Zudem wird eine Nabe mit in axialer Richtung verlaufender Innenverzahnung bereitgestellt, welche mit der Außenverzahnung der Grundwelle korreliert und die Innenverzahnung mindestens zwei Zähne mit zueinander unterschiedlichen Kopfkreisdurchmessern aufweist, wobei der einen erste Kopfkreisdurchmesser aufweisende Zahn größer ausgebildet ist als der einen zweiten Kopfkreisdurchmesser aufweisende Zahn. Bei der Montage der Nabe wird die Nabe winkelausgerichtet auf die Außenverzahnung der Grundwelle aufgefädelt und die miteinander korrelierende Außenverzahnung der Grundwelle, mit ihren Zahnzwischenräumen und dem zweiten Fußkreisdurchmesser, und die Innenverzahnung der Nabe, mit den zweiten Kopfkreisdurchmesser, bilden einen Schiebesitz aus. Die Nabe wird axial entlang des Formschlussteilbereiches der Grundwelle verschoben, bis die Innenverzahnung der Nabe in den Ausrichtbereich eingeschoben ist. Anschließend erfolgt ein winkelgenaues Ausrichten der Nabe relativ zur Außenverzahnung der Grundwelle, so dass zumindest eine Durchmesserpaarung bzw. Kombination von dem einen ersten bzw. den einen ersten Fußkreisdurchmesser aufweisenden Zahnzwischenraum bzw. aufweisenden Zahnzwischenräumen der Außenverzahnung und dem einen zweiten bzw. den einen zweiten Kopfkreisdurchmesser aufweisenden Zahn bzw. aufweisenden Zähnen der Innenverzahnung entsteht und diese axial fluchten. Anschließend erfolgt ein axiales Verschieben der Nabe entlang des Formschlussteilbereiches oder des Kraftschlussteilbereiches der Grundwelle bis zu deren Endposition, wobei aufgrund der vorhandenen Überdeckung zwischen dem einen ersten Fußkreisdurchmesser aufweisenden Zahnzwischenraum der Grundwelle und dem einen zweiten Kopfkreisdurchmesser aufweisenden Zahn der Nabe (wobei auch mehrere Zahnzwischenräume einen ersten Fußkreisdurchmesser bzw. mehrere Zähne einen zweiten Kopfkreisdurchmesser aufweisen können) eine Pressverbindung zwischen Grundwelle und Nabe ausgebildet wird, wodurch die Nabe gegen axiales Verschieben fixiert wird. Durch die Pressverbindung zwischen der Grundwelle und der Nabe bilden diese auch einen Kraftschlussteilbereich aus. Der Kraftschlussteilbereich umfasst wenigstens die axiale Länge der an dem Pressverbund beteiligten Innenverzahnung der Nabe.

Bei dem beschriebenen Verfahren ergeben sich sämtliche Vorteile, die bereits zu einer gebauten Nockenwelle gemäß dem ersten Aspekt der Erfindung beschrieben worden sind.

Gemäß einer weiteren Ausgestaltung des erfindungsgemäßen Verfahren zur Herstellung einer gebauten Nockenwelle wird eine Grundwelle bereitgestellt, bei der die Oberfläche derart bearbeitet wird, dass auf zumindest einem Teilbereich, eine sich wenigstens abschnittsweise axial entlang der Grundwelle erstreckenden Außenverzahnung ausgebildet wird, für die zumindest eine Nabe mit ihrer Innenverzahnung einen Formschlussteilbereich oder einen Kraftschlussteilbereich bereitstellt, um die Verbindung der Nabe mit der Grundwelle zu gewährleisten. Ferner wird die Außenverzahnung derart ausgebildet, dass sie einen Kopfkreisdurchmesser aufweist. Zudem wird bei dem erfindungsgemäßen Verfahren ein Ausrichtbereich auf der Grundwelle ausgebildet, der sich an den Formschlussteilbereich oder den Kraftschlussteilbereich axial anschließt und für die Nabe mit ihrer Innenverzahnung keinen Formschlussteilbereich ausbildet. Zudem wird eine Nabe mit in axialer Richtung verlaufender Innenverzahnung bereitgestellt, welche mit der Außenverzahnung der Grundwelle korreliert und derart ausgebildet ist, dass mehrere Zähne und mehrere Zahnzwischenräume ausgebildet sind und die Zahnzwischenräume mindestens zwei zueinander unterschiedliche Fußkreisdurchmesser aufweisen, wobei der einen ersten Fußreisdurchmesser aufweisende Zahnzwischenraum größer ausgebildet ist als der einen zweite Fußkreisdurchmesser aufweisende Zahnzwischenraum. Bei der Montage der Nabe wird die Nabe winkelausgerichtet auf die Außenverzahnung der Grundwelle aufgefädelt und die miteinander korrelierende Außenverzahnung der Grundwelle sowie die Innenverzahnung der Nabe in axialer Richtung fluchtend ausgerichtet. Eine Kombination des Kopfkreisdurchmessers der Außenverzahnung, insbesondere der einen Kopfkreisdurchmesser aufweisenden Zähne der Außenverzahnung, mit dem ersten Fußkreisdurchmesser der Innenverzahnung der Nabe, insbesondere mit den einen ersten Fußkreisdurchmesser aufweisenden Zahnzwischenraum bzw. Zahnzwischenräumen der Innenverzahnung der Nabe, bilden einen Schiebesitz aus. Die Nabe wird axial entlang des Formschlussteilbereiches und/oder Kraftschlussbereiches der Grundwelle verschoben, bis die Innenverzahnung der Nabe in den Ausrichtbereich eingeschoben ist. Anschließend erfolgt ein winkelgenaues Ausrichten der Nabe relativ zur Außenverzahnung der Grundwelle, so dass zumindest eine Kombination von Kopfkreisdurchmesser der Außenverzahnung und dem zweitem Fußkreisdurchmesser der Innenverzahnung axial fluchtet. Anschließend erfolgt ein axiales Verschieben der Nabe entlang des Formschlussteilbereiches und/oder Kraftschlussteilbereiches der Grundwelle bis zu deren Endposition, wobei aufgrund der vorhandenen Überdeckung zwischen dem Kopfkreisdurchmesser der Grundwelle, insbesondere dem wenigstens einen Zahn aufweisenden den Kopfkreisdurchmesser, und dem zweiten Fußkreisdurchmesser der Nabe, insbesondere dem wenigstens einen Zahnzwischenraum aufweisend den zweiten Fußkreisdurchmesser, eine Pressverbindung zwischen Grundwelle und Nabe ausgebildet wird, wodurch die Nabe gegen axiales Verschieben fixiert wird. Zudem wird durch die Pressverbindung zwischen Grundwelle und Nabe, der Kraftschlussteilbereich der Grundwelle ausgebildet. Der Kraftschlussteilbereich erstreckt sich wenigstens derart entlang der Grundwelle, dass die Länge der Innenverzahnung der Nabe und deren Endposition auf der Grundwelle umfasst sind. Es ist jedoch auch denkbar, dass der Kraftschlussteilbereich zudem den Verschiebeweg der Nabe umfasst.

Bei dem beschriebenen Verfahren ergeben sich sämtliche Vorteile, die bereits zu einer gebauten Nockenwelle gemäß dem zweiten Aspekt der Erfindung beschrieben worden sind.

Bei einer bevorzugten Ausgestaltung des erfindungsgemäßen Verfahrens wird der Ausrichtbereich derart angeordnet, dass der Formschlussteilbereich und/oder Kraftschlussteilbereich durch den Ausrichtbereich in wenigstens zwei axial beabstandete Formschlussteilbereiche und/oder Kraftschlussteilbereiche aufgeteilt wird bzw. werden. Vorteilhaft kann so der Verschiebeweg, das bedeutet der Weg, entlang dem die Nabe mit Presssitz über die Außenverzahnung geschoben wird, verkürzt werden. Die Gefahr einer Beschädigung der Außenverzahnung wird somit reduziert.

Bei einer weiteren bevorzugten Ausgestaltung der Erfindung wird der Ausrichtbereich durch Aussparungen in der Außenverzahnung, beispielsweise durch Fräsen oder Schleifen, ausgebildet. Mit Vorteil kann beispielsweise eine durchgehende Außenverzahnung ausgebildet werden, welche dann durch wenigstens einen nachträglich eingebrachten bzw. ausgebildeten Ausrichtbereich unterbrochen und in verschiedene Formschlussteilbereiche oder Kraftschlussteilbereiche unterteilt wird. Auf diese Weise kann beispielsweise das Walzen zur Ausbildung der Verzahnung genutzt werden. Ferner kann die Außenverzahnung mit Vorteil wahlweise über den gesamten Umfang der Grundwelle oder lediglich in einem Umfangsteilbereich abgetragen werden, so dass sie für die Innenverzahnung der Nabe keinen Formschlussteilbereich und/oder Kraftschlussteilbereich mehr darstellt. Die Außenverzahnung kann in den anderen Bereichen erhalten und für eine drehfeste Verbindung oder axiale Führung der Naben mit bzw. an der Grundwelle genutzt werden. Alternativ ist es jedoch auch denkbar die Außenverzahnung mittels kaltziehen bzw. formziehen und dgl. auszubilden, wobei der Ausrichtbereich in diesem Fall vorzugsweise direkt beim Erzeugen der Außenverzahnung ausgebildet wird. Eine Nachbearbeitung mittels Schleifen oder Fräsen kann jedoch erfolgen. Mit Vorteil wird im Ausrichtbereich kein Formschluss zwischen der Grundwelle und der Nabe mit ihrer Innenverzahnung ausgebildet, wodurch die Nabe in eine gewünschte Winkellage relativ zur Grundwelle bzw. deren Außenverzahnung gedreht bzw. verdreht werden kann. Mit Vorteil wird im Ausrichtbereich zudem keine Kraftschlussverbindung ausgebildet, wodurch die Winkellage der Nabe mit wenig Kraft und Materialschonend (ohne Reibung oder Materialabtrag) einstellbar ist.

Bei einer bevorzugten Weiterbildung des erfindungsgemäßen Verfahrens wird auf der Grundwelle eine zweite Nabe gefügt, wobei die zweite Nabe einen Kopfkreisdurchmesser und einen Fußkreisdurchmesser aufweisende Innenverzahnung umfasst und die Innenverzahnung mit der Außenverzahnung der Grundwelle korreliert und einen Schiebesitz ausbildet. Mit Vorteil kann die zweite Nabe axial verschoben werden und ermöglicht damit die Umsetzung eines Schiebenockensystems.

Ausführungsformen einer erfindungsgemäßen gebaute Nockenwelle sowie eine Ausführungsform eines erfindungsgemäßen Verfahrens zum Herstellen einer erfindungsgemäßen gebauten Nockenwelle werden nachfolgend anhand von Zeichnungen näher erläutert. Es zeigen jeweils schematisch und im Prinzip:
- Figur 1: eine Seitenansicht einer Ausführungsform einer erfindungsgemäßen gebauten Nockenwelle,
- Figur 2: einen vergrößerten Ausschnitt eines Querschnittes einer Ausgestaltung einer eine Außenverzahnung aufweisenden Grundwelle einer erfindungsgemäßen gebauten Nockenwelle ,
- Figur 3: einen vergrößerten Ausschnitt eines Querschnittes einer Ausgestaltung einer eine Innenverzahnung aufweisenden Nabe einer erfindungsgemäßen gebauten Nockenwelle,
- Figur 4: einen Verfahrensschritt bei der Durchführung einer Ausführungsform des erfindungsgemäßen Verfahrens,
- Figur 5: einen vergrößerten Ausschnitt eines Querschnittes der Grundwelle und der Nabe bei dem in der Figur 4 gezeigten Montageschritt,
- Figur 6: einen weiteren Verfahrensschritt bei der Durchführung einer Ausführungsform des erfindungsgemäßen Verfahrens,
- Figur 7: einen vergrößerten Ausschnitt eines Längsschnittes durch die Grundwelle und die Nabe einer Ausführungsform einer erfindungsgemäßen Nockenwelle während der Durchführung des Verfahrensschrittes des erfindungsgemäßen Verfahrens, wie in der Figur 4 gezeigt,
- Figur 8: einen vergrößerten Ausschnitt eines Querschnittes der Grundwelle und der Nabe einer Ausführungsform einer erfindungsgemäßen Nockenwelle während der Durchführung des weiteren Verfahrensschrittes des erfindungsgemäßen Verfahrens, wie in der Figur 6 gezeigt,
- Figur 9: einen weiteren Verfahrensschritt bei der Durchführung einer Ausführungsform des erfindungsgemäßen Verfahrens,
- Figur 10: einen vergrößerten Ausschnitt eines Querschnittes der Grundwelle und der Nabe einer Ausführungsform einer erfindungsgemäßen Nockenwelle während der Durchführung des weiteren Verfahrensschrittes des erfindungsgemäßen Verfahrens, wie in der Figur 9 gezeigt,
- Figur 11: einen weiteren Verfahrensschritt bei der Durchführung einer Ausführungsform des erfindungsgemäßen Verfahrens,
- Figur 12: einen vergrößerten Ausschnitt eines Querschnittes der Grundwelle und der Nabe einer Ausführungsform einer erfindungsgemäßen Nockenwelle während der Durchführung des weiteren Verfahrensschrittes des erfindungsgemäßen Verfahrens, wie in der Figur 11 gezeigt,
- Figur 13: einen vergrößerten Ausschnitt eines Querschnittes einer Grundwelle und einer Nabe einer weiteren Ausführungsform einer erfindungsgemäßen gebauten Nockenwelle.

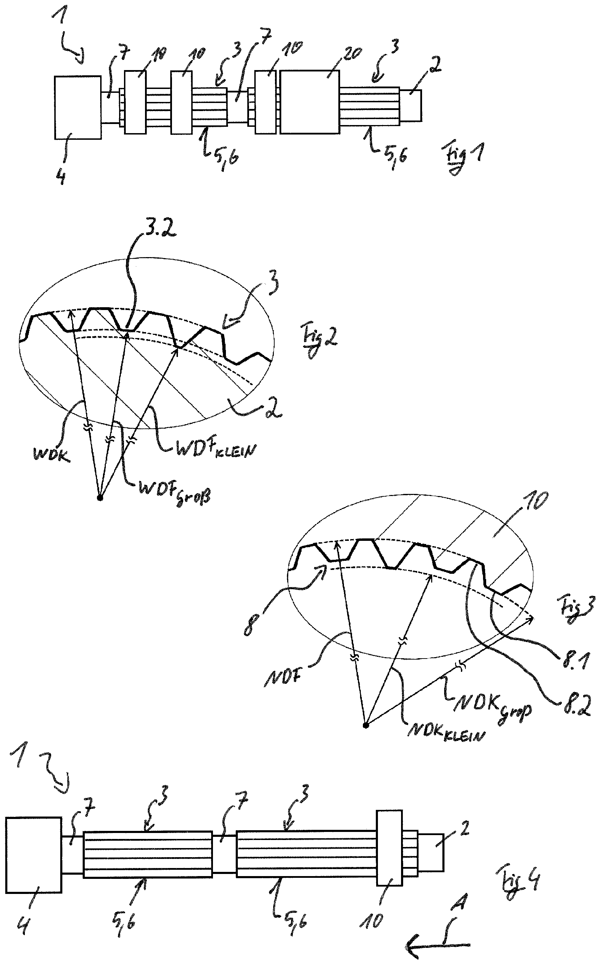

Elemente mit gleicher Funktion und Wirkungsweise sind in den Figuren 1 bis 13 jeweils mit denselben Bezugszeichen versehen.

In der Figur 1 ist schematisch eine gebaute Nockenwelle 1 für eine Brennkraftmaschine gezeigt, die nach dem Prinzip einer Nockenwelle mit Schiebenockenelementen aufgebaut ist. Die gebaute Nockenwelle 1 umfasst wenigstens eine Grundwelle 2 mit einer Außenverzahnung 3 sowie eine mit der Grundwelle drehfest und unverschiebbar verbundene Nabe 10. Die Grundwelle 2 ist vorzugsweise stabförmig und kann als Hohlwelle oder Vollwelle ausgebildet sein. Die Nabe 10 kann beispielsweise ein Sensorrad oder ein Nocken, wie beispielsweise ein Pumpennocken oder ein Nocken zur Ventilbetätigung, sein. An einem Ende weist die Grundwelle 2 ein Endstück 4 auf, an dem beispielsweise ein Zahnrad (hier nicht gezeigt) zum Antreiben der Nockenwelle 1 angebracht werden kann. Das Endstück 4 kann einstückig mit der Grundwelle 2 ausgebildet oder separat gefertigt und nachträglich montiert sein. Ferner ist es denkbar, dass kein Endstück 4 an der Grundwelle 2 ausgebildet ist, sondern eine Durchmesservergrößerung oder dgl. vorgesehen ist. Allen Varianten ist gemeinsam, dass die Komponenten nur von einer Seite der Nockenwelle 1 gefügt werden können.

Wie weiter in der Figur 1 dargestellt, kann die gebaute Nockenwelle 1 mehrere drehfest und axial unverschiebbare Naben 10 aufweisen. Die Außenverzahnung 3 der Grundwelle 2 ist beispielsweise durch ein Vielzahnprofil in Form einer Evolventenverzahnung gebildet. Das Vielzahnprofil der Außenverzahnung 3 kann auch als ein Polygon oder ähnliche Unrunde ausgebildet sein. Wesentlich ist hierbei, dass das Unrund die Nabe 10 drehfest fixieren und das zu übertragende Drehmoment von der Grundwelle 2 auf die Nabe 10 übertragen kann. Die Außenverzahnung 3 kann beispielsweise mittels eines Walz-, Fräs- und/oder Ziehverfahrens an der stabförmigen Grundwelle 2 ausgebildet werden. Die Außenverzahnung 3 bildet für die Nabe 10 einen Formschlussteilbereich 5 oder eine Kraftschlussteilbereich 6 aus. Der Formschlussteilbereich 5 dient beispielsweise zur axialen Führung der Naben 10 während der Montage. Die Nabe 10 ist mittels eines später genauer beschriebenen Pressverbandes axial unverschiebbar an der Grundwelle 2 fixiert. Eine drehfeste Verbindung zwischen Grundwelle 2 und Nabe 10 kann durch diese Pressverbindung oder durch die Formschlussteilbereiche 5 der Nockenwelle 1 erfolgen. Eine wechselseitige Unterstützung bzw. Ergänzung zum Zwecke der Fixierung der Nabe 10 an der Grundwelle 2 ist ebenfalls möglich. Durch die Pressverbindung zwischen Grundwelle 2 und Nabe 10 wird der Kraftschlussteilbereich 6 der Grundwelle 2 ausgebildet. Der Kraftschlussteilbereich 6 erstreckt sich wenigstens derart entlang der Grundwelle 2, dass die Länge der Innenverzahnung der Nabe 10 und deren Endposition auf der Grundwelle 2 umfasst sind. Es ist jedoch auch denkbar, dass der Kraftschlussteilbereich 6 zudem den Verschiebeweg der Nabe 10 umfasst. Daher ist es denkbar, dass beide Teilbereiche, nämlich ein Formschlussbereich 5 und ein Kraftschlussteilbereich 6 axial beabstandet zueinander derart auf der Grundwelle 2 ausgebildet sind, dass beide Teilbereiche sich zumindest abschnittsweise axial entlang der Grundwelle 2 erstrecken. Vorteilhaft erstrecken sich beide Teilbereiche vollständig in Umfangsrichtung um die Grundwelle 2 herum. Bei der in der Figur 1 gezeigten Ausgestaltung ist die Außenverzahnung 3 in zwei Teilbereiche und damit in zwei Formschlussteilbereiche 5 oder zwei Kraftschlussteilbereiche 6 aufgeteilt. Zwischen den beiden Teilbereichen sowie zwischen dem Endstück 4 und einem der beiden Teilbereiche, insbesondere dem zweiten Teilbereich der Außenverzahnung 3 ist jeweils ein Ausrichtbereich 7 ausgebildet.

Wird die Außenverzahnung 3 beispielsweise durch Walzen der stabförmigen Grundwelle 2 ausgebildet, kann durch nachträgliches Schleifen oder Fräsen dieser Außenverzahnung 3 der Ausrichtbereich 7 ausgebildet werden. Es ist jedoch auch möglich, dass die Außenverzahnung 3 lediglich abschnittsweise in axialer Länge auf der Grundwelle ausgebildet wird, wodurch auch die Ausrichtbereiche 7, insbesondere durch eine nicht erfolgende Bearbeitung der Oberfläche der Grundwelle 2 in Bereichen zwischen den bearbeiteten Abschnitten, bereits ausgebildet werden können. So kann beispielsweise bei einem Ziehprozess, bei dem ein stabförmiger Grundkörper durch eine Matrize gezogen bzw. geschoben wird, die Ausbildung der Ausrichtbereich 7 und der Teilbereich, insbesondere der Formschlussteilbereiche 5 bzw. der Kraftschlussteilbereiche 6, der Außenverzahnung 3 in Abhängigkeit ihrer axialen Anordnung auf der Grundwelle 2 ausgebildet werden. Vorzugsweise ist dann eine nachträgliche Bearbeitung der Grundwelle 2 zur Ausbildung des Ausrichtbereiches 7 nicht erforderlich.

Des Weiteren weist die gebaute Nockenwelle 1 eine weitere Nabe 20 auf, die axial entlang der Außenverzahnung, insbesondere entlang der gebildeten Teilbereiche, wie dem Kraftschlussteilbereich 6 und/oder dem Formschlussteilbereich 5 verschiebbar ist. Die weitere Nabe 20 stellt ein Schiebenockenelement dar, wie dieses aus dem allgemeinen Stand der Technik bereits hinlänglich bekannt ist. Die Außenverzahnung 3 der Grundwelle 2 bildet für die Nabe 20 einen Formschlussteilbereich 5 aus. Die Nabe 20 ist durch den Formschlussteilbereich 5 axial entlang der Grundwelle 2 geführt und drehfest mit dieser verbunden.

Die Figur 2 zeigt einen vergrößerten Ausschnitt eines Querschnitt einer Grundwelle 2 einer Ausführungsform einer erfindungsgemäßen gebauten Nockenwelle. Die Außenverzahnung 3, hier beispielsweise als Evolventenverzahnung ausgeführt, insbesondere deren Zähne 3.1 weisen einen (einzigen) Kopfkreisdurchmesser WDK auf, während deren Zahnzwischenräume 3.2 zwei Fußkreisdurchmesser, insbesondere einen ersten Fußkreisdurchmesser WDF_{Groß}, und einen zweiten Fußkreisdurchmesser WDF_{Klein} aufweisen. In Figur 2 ist exemplarisch ein Zahnzwischenraum 3.2 mit dem zweiten Fußkreisdurchmesser WDF_{Klein} gezeigt, der, wie dargestellt, einen kleineren Durchmesser aufweist als der Zahnzwischenraum 3.2, welcher einen erste Fußkreisdurchmesser WDF_{groß} aufweist. Je nach Ausgestaltung können die Anzahl und die Verteilung der verschieden großen bzw. kleinen Zahnzwischenräume 3.2 variieren. Vorzugsweise sind diese unterschiedlich dimensionierten Zahnzwischenräume 3.2 derart gleichmäßig über den Umfang verteilt, dass sich die Zahnzwischenräume 3.2 mit einem erste Fußkreisdurchmesser WDF_{Groß} und die Zahnzwischenräume 3.2 mit einem zweiten Fußkreisdurchmesser WDF _{Klein} abwechseln.

In der Figur 3 ist ein vergrößerter Ausschnitt eines Querschnittes einer Nabe 10 einer Ausführungsform einer erfindungsgemäßen gebauten Nockenwelle 1 dargestellt. Die Nabe 10 weist eine Innenverzahnung 8 auf, die sich in axialer Richtung erstreckt. In der in Figur 3 gezeigten Ausführung weist die Innenverzahnung 8 Zähne 8.1 mit jeweils zwei zueinander unterschiedlichen Kopfkreisdurchmessern, nämlich einem ersten, insbesondere einem groß dimensionierten Kopfkreisdurchmesser NDK_{Groß} und einem zweiten, insbesondere klein dimensionierten Kopfkreisdurchmesser NDK_{Klein,}auf. Wie in der Figur 3 weiter gezeigt, ist der erste Kopfkreisdurchmesser NDK_{Groß}, insbesondere der einen ersten Kopfkreisdurchmesser NDK_{Groß} aufweisende Zahn 8.1 größer als der zweite Kopfkreisdurchmesser NDK_{Klein}. , insbesondere größer als der einen zweiten Kopfkreisdurchmesser NDK_{Klein} aufweisende Zahn 8.1. Je nach Ausgestaltung kann die Anzahl und die Verteilung der Zähne 8.1, welche jeweils verschiedene Kopfkreisdurchmesser aufweisen und damit die Ausbildung verschieden großer Zähne variiert werden. Vorzugsweise sind die verschiedenen Zähne bzw. die verschiedenen Kopfkreisdurchmesser gleichmäßig alternierend über den Umfang der Innenverzahnung 8 der Nabe 10 verteilt. Zwischen den Zähnen 8.1 der Innenverzahnung 8 der Nabe 10 sind Zahnzwischenräume 8.2 ausgebildet, welche vorteilhaft einen zueinander identischen Fußkreisdurchmesser NDF aufweisen.

Die Dimensionen der Innenverzahnung 8 der Nabe 10 sind derart gewählt, dass die Zähne 8.1 der Innenverzahnung 8 der Nabe 10, welche einen zweiten Kopfkreisdurchmesser NDK_{Klein} aufweisen,mit den Zahnzwischenräumen 3.2 der Außenverzahnung 3 der Grundwelle 2, welche einen zweiten Fußkreisdurchmesser WDF_{Klein} aufweisen, bzw. die Zähne 8.1 der Innenverzahnung 8 der Nabe 10, welche einen ersten Kopfkreisdurchmesser NDK_{Groß} aufweisen, mit den Zahnzwischenräumen 3.2 der Außenverzahnung 3 der Grundwelle 2, welche einen ersten Kopfreisdurchmesser WDF_{Groß} aufweisen, einen Schiebesitz ausbilden. Die Kombination von Zähnen 8.1 der Innenverzahnung 8 der Nabe 10 mit einem zweiten Kopfkreisdurchmesser NDK_{Klein} und der Zahnzwischenräumen 3.2 der Außenverzahnung 3 der Grundwelle 2 mit einem ersten Fußkreisdurchmesser WDF_{Groß} 2 ergibt eine Überdeckung und damit eine Pressverbindung zwischen der Grundwelle 2 und der Nabe 10.

Die Figuren 4, 6 und 9 zeigen verschiedene Stadien des erfindungsgemäßen Verfahrens während der Herstellung einer erfindungsgemäßen Nockenwelle 1. So zeigt die Figur 4 die Grundwelle 2 mit einem Endstück 4. An der Grundwelle 2 ist bereits die Außenverzahnung 3 ausgebildet. Die Außenverzahnung 3 ist von einem Ausrichtbereich 7 in zwei Teilbereiche unterteilt bzw. zwischen zwei Teilbereichen der Außenverzahnung 3 ist ein Ausrichtbereich 7 ausgebildet. Bei einer Montage einer Nabe 10 wird die axial unverschiebbar auf der Grundwelle 2 anzuordnende Nabe 10 in einer Auffädelrichtung A auf einen ersten Teilbereich der Außenverzahnung 3 und damit auf den ersten Formschlussteilbereich 5 der Grundwelle 2 aufgeschoben. Um das Aufschieben der Nabe 10 zu ermöglichen, muss die Nabe 10 gegenüber der Grundwelle 2 winkelausgerichtet werden. Dazu wird die Nabe 10 derart zur Außenverzahnung 3 der Grundwelle 2 ausgerichtet, dass die Zähne 8.1 (vgl. Figur 3) der Innenverzahnung 8 der Nabe 10, welche einen zweiten Kopfkreisdurchmesser NDK_{Klein} aufweisen mit den Zahnzwischenräumen 3.2 (vgl. Figur 2) der Außenverzahnung 3 der Grundwelle 2, welche einen zweiten Fußkreisdurchmesser WDF_{Klein} aufweisen, und die Zähne 8.1 (vgl. Figur 3) der Innenverzahnung 8 der Nabe 10, welche einen ersten Kopfkreisdurchmesser NDK_{Groß} aufweisen mit den Zahnzwischenräumen 3.2 (vgl. Figur 2) des Außendurchmessers 3 der Grundwelle 2, welche einen ersten Fußkreisdurchmesser WDF_{Groß} aufweisen, fluchten und eine korrelierende Durchmesserpaarung ausbilden. Mittels einer Relativbewegung zwischen der Grundwelle 2 und der Nabe 10 wird die Nabe 10 auf die Grundwelle 2 aufgefädelt, wobei die Außenverzahnung 3 der Grundwelle 2 und die Innenverzahnung 8 der Nabe 10 einen Schiebesitz ausbilden.

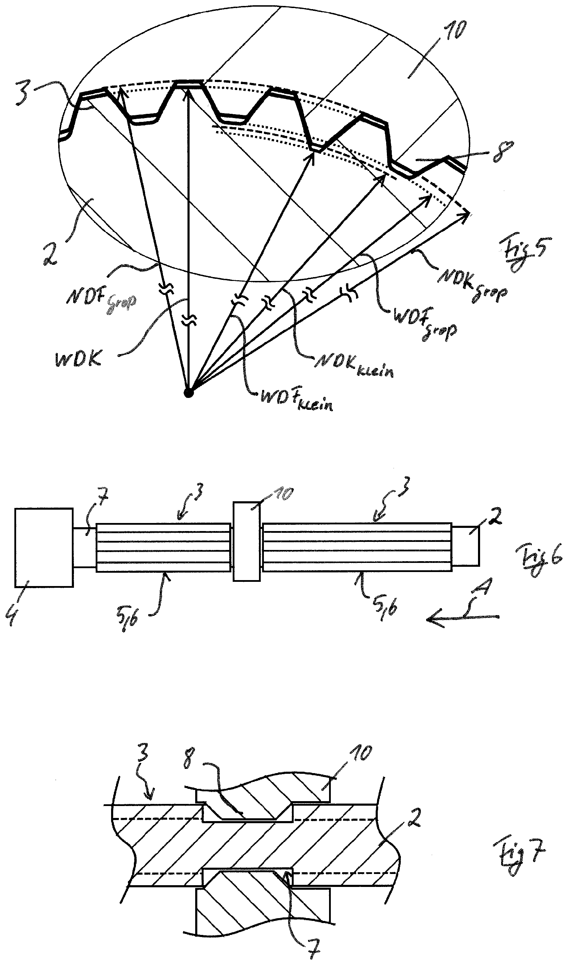

Beim Verschieben der Nabe 10 entlang des ersten Formschlussteilbereiches 5, wie in der Figur 4 gezeigt, stellt die Paarung der korrelierenden Verzahnungen einen Schiebesitz ein. Diese Situation ist in Figur 5 gezeigt.

Figur 6 zeigt einen weiteren Verfahrensschritt bei der Herstellung einer Ausführungsform einer erfindungsgemäßen gebauten Nockenwelle. Die Nabe 10 ist hier soweit axial verschoben, dass ihre Innenverzahnung 8 in dem Ausrichtbereich 7 aufgenommen wird. Auf die Nabe 10 wirkt hier nicht der Formschlussteilbereich 5, wodurch die Nabe 10 in dieser Situation in ihrer Winkelausrichtung verändert werden kann.

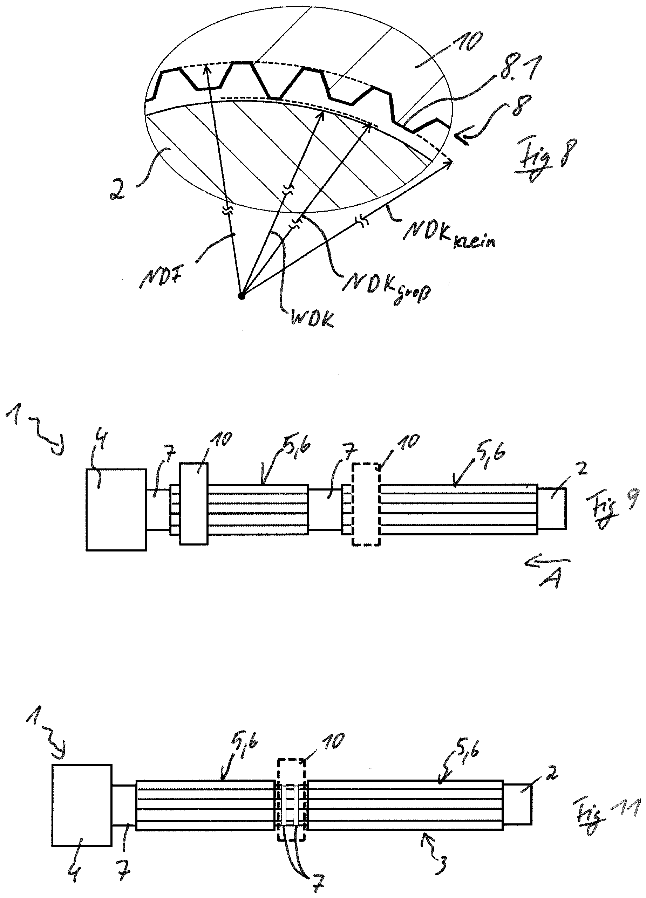

Dieser Zustand gemäß der Figur 6 ist in der Figur 7 in einem Längsschnitt dargestellt. Die Innenverzahnung 8 der Nabe 10 ist in dem Ausrichtbereich 7 angeordnet. Die Innenverzahnung 8 der Nabe 10 erstreckt sich in der gezeigten Ausgestaltung nicht über die gesamte Länge der Nabe 10. Der Ausrichtbereich 7 ist so dimensioniert, dass er die Innenverzahnung 8 der Nabe 10 aufnehmen und die Verdrehung der Nabe 10 ermöglichen kann. Ferner ist in Figur 8 erkennbar, dass die Innenverzahnung 8 der Nabe 10, insbesondere die Zähne 8.1 der Innenverzahnung 8 der Nabe 10 unterschiedliche Kopfkreisdurchmesser aufweisen.

Ebenso ist der in der Figur 6 dargestellte Zustand in der Figur 8 gezeigt, insbesondere in einem Querschnitt durch die Grundwelle 2 und die Nabe 10 während der Positionierung der Nabe 10 im Ausrichtbereich 7. Die Zähne 8.1 der Innenverzahnung 8 der Nabe mit einem ersten Kopfkreisdurchmesser NDK_{Groß} und einem zweiten Kopfkreisdurchmesser NDK_{Klein} haben zur Grundwelle 2 keine Form- und/oder Kraftschlußverbindung. Die Nabe 10 kann verdreht und winkelausgerichtet werden.

In der Figur 9 ist ein weiterer Verfahrensschritt dargestellt. Nach der Winkelausrichtung der Nabe 10 und der Einstellung der Verzahnungspaarung zwischen Nabe 10 und Grundwelle 2 derart, dass die Überdeckung zwischen Nabe 10 und Grundwelle 2 eingestellt ist, wird die Nabe 10 entlang des Formschlussteilbereichs 5 oder in deren Endposition geschoben und bildet hier somit den Kraftschlussteilbereich 6 aus. Ausgehend von der Situation gemäß Figur 6 kann die Nabe in Auffädelrichtung A oder entgegen der Auffädelrichtung A verschoben werden, wie auch mittels der gestrichelt dargestellte Nabe 10 angedeutet. Soll die Nabe 10 die Endposition entsprechend der linken Position gemäß Figur 9 einnehmen (Verschiebung der Nabe 10 in Auffädelrichtung A), ist auch ein Verschieben der Nabe 10 bis in den an das Endstück 4 grenzenden Ausrichtbereich 7 möglich. Dort könnte dann die Winkelausrichtung der Nabe 10 erfolgen, Anschließend könnte die Nabe 10 in Endposition (insbesondere entgegen der Auffädelrichtung A) verschoben werden. Es ist jedoch auch möglich durch entsprechende Winkelverdrehung der Nabe 10 im Ausrichtbereich 7 zwischen den beiden Formschlussteilbereichen 5 oder den beiden Kraftschlussteilbereichen 6 und durch ein nachfolgendes Verschieben der Nabe 10 in Auffädelrichtung A diese Nabe in deren Endposition, insbesondere auf einen Teilbereich der Verzahnung 3 aufzubringen.

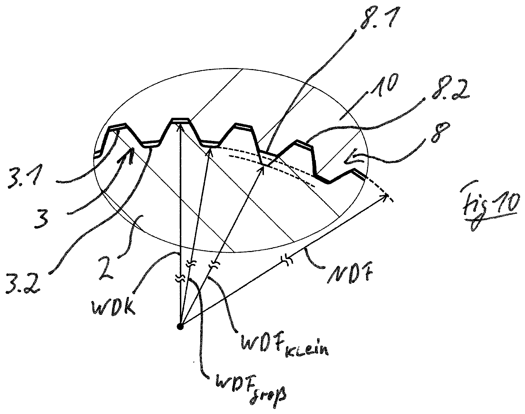

Die Situation gemäß Figur 9, bei der die Nabe 10 in Endposition gebracht wurde, ist auch in der Figur 10 als Querschnitt in einem vergrößerten Ausschnitt dargestellt. Die Zähne 8.1 der Innenverzahnung 8 der Nabe 10, welche einen ersten Kopfkreisdurchmesser NDK_{Groß} aufweisen, sind mit den Zahnzwischenräumen 3.2 der Außenverzahnung 3 der Grundwelle 2, welche einen ersten Fußkreisdurchmesser WDF_{Groß} aufweisen, in Eingriff gebracht. Damit ist zwischen der Grundwelle 2 und der Nabe 10 eine Pressverbindung ausgebildet, wodurch die Nabe axial fixiert ist.

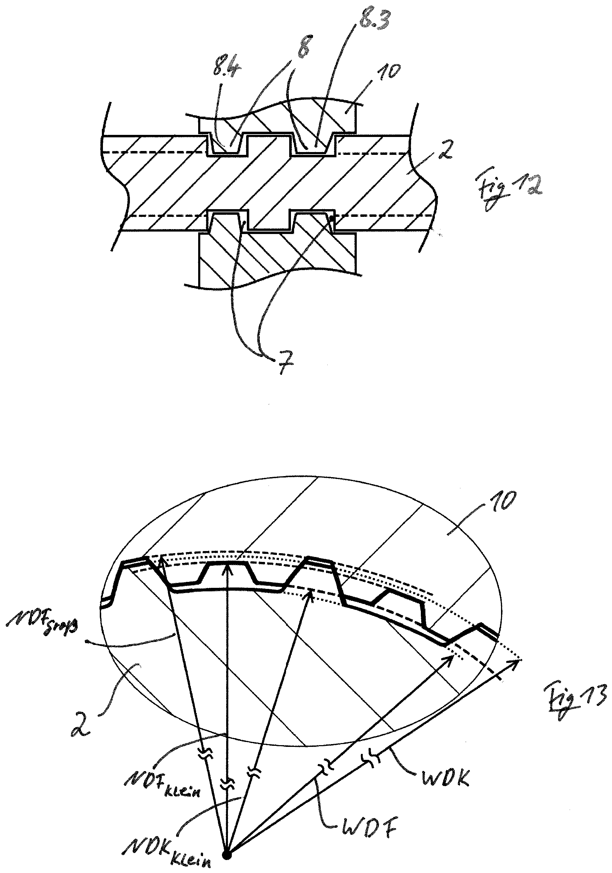

Die Figur 11 zeigt eine Ausgestaltung, bei der mehrere Formschlussteilbereiche 5 und/oder Kraftschlussteilbereiche 6 und zwischen diesen jeweils ein Ausrichtbereich 7 ausgebildet sind. Die Ausrichtbereiche 7 und die Formschlussteilbereiche 5 und/oder Kraftschlussteilbereiche 6 wechseln einander entlang der Grundwelle 2, in axialer Richtung betrachtet, ab. Die gestrichelt dargestellte Nabe 10 befindet sich in einer Position, in der sie winkelausgerichtet werden kann. Dieser Zustand ist ebenfalls in der Figur 12 gezeigt, welche einen vergrößerten Ausschnitt von Nabe 10 und Grundwelle 2 im Längsschnitt aufzeigt. Hierdurch wird die entsprechende Anordnung der Innenverzahnung 8 in den Ausrichtbereichen 7 verdeutlicht. Die Innenverzahnung 8 der Nabe 10 ist in dieser Weiterbildung axial aufgeteilt, und zwar in zwei Abschnitte 8.3 und 8.4. Prinzipiell ist es auch vorstellbar, dass die Innenverzahnung 8 der Nabe 10 in mehr als zwei Abschnitte, insbesondere drei oder mehr Abschnitte aufgeteilt ist. Vorteilhaft ergibt sich daraus, dass die Formschlussteilbereiche 5 und/oder die Kraftschlussteilbereiche 6 der Grundwelle 2 auf axial kürzeren Abschnitten unterbrochen sind. Da diese Formschlussteilbereiche 5 in ihrer axialen Erstreckung geringere Unterbrechungen aufweisen, können sie für andere Naben und deren Drehmomentübertragung oder axiale Führung besser genutzt werden.

Eine weitere Ausführungsform einer erfindungsgemäßen gebauten Nockenwelle 1 ist in der Figur 13 als vergrößerter Ausschnitt im Querschnitt dargestellt. Die Nabe 10 weist eine Innenverzahnung 8 mit Zahnzwischenräumen 8.2 aufweisend zwei verschiedene Fußkreisdurchmessern NDF_{Groß}, NDF_{Klein} auf, wogegen die Außenverzahnung 3 der Grundwelle 2 eine Außenverzahnung 3 mit (lediglich) einem (einzigen) Kopfkreisdurchmesser WDK und (lediglich) einem (einzigen)Fußkreisdurchmesser WDF aufweist. Ferner ist ersichtlich, dass die Außenverzahnung 3 der Grundwelle 2 nur so viele Zähne 3.2 aufweist, dass diese ausschließlich in eine Art der Zahnzwischenräume 8.2, in dieser Winkelausrichtung beispielsweise in den ersten Fußkreisdurchmesser NDF_{Groß} der Nabe 10, eingreift. Die Pressverbindung zwischen der Grundwelle 2 und der Nabe 10 wird durch die Verzahnungspaarung von Zähnen 3.1 der Außenverzahnung 3 der Grundwelle 2 mit dem Kopfkreisdurchmesser WDK und den Zahnzwischenräumen 8.2 der Innenverzahnung 8 der Nabe 10 mit dem zweiten Fußkreisdurchmesser NDF_{Klein} eingestellt. Die Verzahnungspaarung gebildet aus den Zähnen 3.1 der Außenverzahnung 3 der Grundwelle 2 mit dem Kopfreisdurchmesser WDK und den Zahnzwischenräumen 8.2 der Innenverzahnung 8 der Nabe 10 mit einem ersten Fußkreisdurchmesser NDF_{Groß}, wie in der Figur 13 gezeigt, bildet einen Schiebesitz aus.

### Bezugszeichenliste

- 1: Nockenwelle
- 2: Grundwelle
- 3: Außenverzahnung
- 3.1: Zahn der Außenverzahnung
- 3.2: Zahnzwischenraum der Außenverzahnung
- 4: Endstück
- 5: Formschlussteilbereich
- 6: Kraftschlussteilbereich
- 7: Ausrichtbereich
- 8: Innenverzahnung der Nabe
- 8.1: Zahn der Innenverzahnung
- 8.2: Zahnzwischenraum der Innenverzahnung
- 8.3: Abschnitt der Innenverzahnung
- 8.4: Abschnitt der Innenverzahnung

- 10: erste Nabe
- 20: zweite Nabe

- A: Auffädelrichtung

- WDK: Kopfkreisdurchmesser der Grundwelle
- WDF: Fußkreisdurchmesser der Grundwelle
- WDF_{Groß}: erster Fußkreisdurchmesser der Grundwelle
- WDF_{Klein}: zweiter Fußkreisdurchmesser der Grundwelle
- WDK_{Groß}: erster Kopfkreisdurchmesser der Grundwelle
- WDK_{Klein}: zweiter Kopfkreisdurchmesser der Grundwelle
- NDK_{Groß}: erster Kopfkreisdurchmesser der (ersten) Nabe
- NDK_{Klein}: zweiter Kopfkreisdurchmesser der (ersten) Nabe
- NDK: Kopfkreisdurchmesser der Nabe
- NDF_{Groß}: erster Fußkreisdurchmesser der (ersten) Nabe
- NDF_{Klein}: zweiter Fußkreisdurchmesser der (ersten) Nabe

- NDK2: Kopfkreisdurchmesser der zweiten Nabe

## Patentansprüche

1. Gebaute Nockenwelle (1) für eine Brennkraftmaschine, wobei die Nockenwelle (1) eine Grundwelle (2) und eine sich zumindest abschnittsweise axial entlang der Grundwelle (2) erstreckende Außenverzahnung (3) umfasst, sowie mindestens eine Nabe (10) mit einer Innenverzahnung (8), welche mit der Außenverzahnung (3) der Grundwelle (2) derart korreliert, dass die Nabe (10) drehfest und axial unverschiebbar mit der Grundwelle (2) verbundenen ist, wobei die Außenverzahnung (3) mindestens einen sich axial zumindest abschnittsweise entlang der Grundwelle (2) erstreckenden Formschlussteilbereich (5) oder einen Kraftschlussteilbereich (6) aufweist, um die Nabe (10) zumindest formschlüssig oder kraftschlüssig anzuordnen, und wobei sich zumindest an den Formschlussteilbereich (5) oder den Kraftschlussteilbereich (6) zumindest ein sich wenigstens abschnittsweise axial entlang der Grundwelle (2) erstreckender Ausrichtbereich (7) zum winkelausrichten der Nabe (10) anschließt, wobei die Außenverzahnung (3) wenigstens des einen Formschlussteilbereiches (5) oder des Kraftschlussteilbereiches (6) wenigstens zwei zwischen den Zähnen ausgebildete Zahnzwischenräume mit zueinander unterschiedlichen Fußkreisdurchmessern (WDF_{Groß}, WDF_{Klein}) und die Innenverzahnung (8) der Nabe (10) zumindest zwei mit den unterschiedlichen Fußkreisdurchmessern (WDF_{Groß}, WDF_{Klein}) korrelierende und zueinander unterschiedliche Kopfkreisdurchmesser (NDK_{Groß}, NDK_{Klein}) aufweisende Zähne umfasst, und wobei der einen zweiten Kopfkreisdurchmesser (NDK_{Klein}) aufweisende Zahn der Nabe (10) mit dem einen zweiten Fußkreisdurchmesser (WDF_{Klein}) aufweisenden Zahnzwischenraum der Grundwelle (2) sowie der einen ersten Kopfkreisdurchmesser (NDK_{Groß}) aufweisende Zahn der Nabe (10) mit dem einen ersten Fußkreisdurchmesser (WDF_{Groß}) aufweisenden Zwischenraum der Grundwelle (2) einen Schiebesitz ausbilden, und wobei zumindest die Formschlussverbindung oder die Kraftschlussverbindung der Nabe (10) mit der Grundwelle (2) zur axialen Fixierung der Nabe (10) aufgrund einer zwischen mindestens dem einen ersten Fußkreisdurchmesser (WDF_{Groß}) aufweisenden Zahnzwischenraum der Außenverzahnung (3) der Grundwelle und dem nicht korrelierenden einen zweiten Kopfkreisdurchmesser (NDK_{Klein}) aufweisenden Zahn der Innenverzahnung (8) der Nabe (10) ausgebildete Pressverbindung besteht.

2. Nockenwelle (1) nach Anspruch 1, **dadurch gekennzeichnet, dass** die wenigstens zwei unterschiedlichen Fußkreisdurchmesser (WDF_{Groß}, WDF_{Klein}) aufweisenden Zahnzwischenräume der Außenverzahnung (3) umlaufend in einander abwechselnder Folge ausgebildet sind.

3. Nockenwelle (1) nach Anspruch 2, **dadurch gekennzeichnet, dass** die wenigstens zwei unterschiedlichen Kopfkreisdurchmesser (NDK_{Groß}, NDK_{Klein}) aufweisenden Zähne der Innenverzahnung (8) der Nabe (10) umlaufend in einander abwechselnder Folge ausgebildet sind.

4. Gebaute Nockenwelle (1) für eine Brennkraftmaschine, wobei die Nockenwelle (1) eine Grundwelle (2) und eine sich zumindest abschnittsweise axial entlang der Grundwelle (2) erstreckende Außenverzahnung (3) umfasst, sowie mindestens eine Nabe (10) mit einer Innenverzahnung (8), welche mit der Außenverzahnung (3) der Grundwelle (2) derart korreliert, dass die Nabe (10) drehfest und axial unverschiebbar mit der Grundwelle (2) verbundenen ist, wobei die Außenverzahnung (3) wenigstens einen sich zumindest abschnittsweise axial entlang der Grundwelle (2) erstreckenden Formschlussteilbereich (5) oder Kraftschlussteilbereich (6) aufweist, um die Nabe (10) zumindest formschlüssig oder kraftschlüssig anzuordnen, wobei die Außenverzahnung (3) zumindest des Formschlussteilbereiches (5) oder des Kraftschlussteilbereiches (6) einen Kopfkreisdurchmesser (WDK) aufweist, und wobei sich zumindest an den Formschlussteilbereich (5) oder den Kraftschlussteilbereich (6) zumindest ein sich wenigstens abschnittsweise axial entlang der Grundwelle (2) erstreckender Ausrichtbereich (7) zum winkelausrichten der Nabe (10) anschließt, und wobei die Innenverzahnung (8) der Nabe (10) zumindest zwei unterschiedliche Fußreisdurchmesser (NDF_{Groß}, NDF_{Klein}) aufweisende Zahnzwischenräume umfasst, wobei der einen erste Fußkreisdurchmesser NDF_{Groß} aufweisende Zahnzwischenraum der Nabe (10) mit der den Kopfkreisdurchmesser (WDK) aufweisenden Außenverzahnung (3) der Grundwelle (2) korreliert und einen Schiebesitz ausbildet, und wobei zumindest die Formschlussverbindung (5) oder die Kraftschlussverbindung (6) der Nabe (10) mit der Grundwelle (2) zur axialen Fixierung der Nabe (10) aufgrund einer zwischen der den Kopfkreisdurchmesser (WDK) aufweisenden Außenverzahnung (3) der Grundwelle (2) und den nicht korrelierenden zweiten Fußkreisdurchmessern (NDF_{Klein}) aufweisenden Zahnzwischenräumen der Innenverzahnung (8) ausgebildeten Pressverbindung besteht.

5. Nockenwelle (1) nach einem der Ansprüche 1 bis 4, **dadurch gekennzeichnet, dass** der Formschlussteilbereich (5) und/oder Kraftschlussteilbereich (6) durch den Ausrichtbereich (7) in wenigstens zwei axial beabstandete Formschlussteilbereiche (5) und/oder Kraftschlussteilbereiche (6) aufgeteilt ist/sind.

6. Nockenwelle (1) nach einem der Ansprüche 1 bis 5, **dadurch gekennzeichnet dass** sich mehrere Formschlussteilbereiche (5) und/oder Kraftschlussteilbereiche (6) und mehrere Ausrichtbereiche (7) einander abwechselnd in axialer Richtung entlang der Grundwelle (2) erstrecken.

7. Nockenwelle (1) nach einem der vorangegangenen Ansprüche, **dadurch gekennzeichnet, dass** die Innenverzahnung (8) der Nabe (10) mit ihrer axialen Erstreckung in wenigstens zwei Teilbereiche aufgeteilt ist.

8. Nockenwelle (1) nach einem der Ansprüche 1 bis 7, **dadurch gekennzeichnet, dass** die Innenverzahnung (8) der Nabe (10) mehr Zähne aufweist als die Außenverzahnung (3) der Grundwelle (2).

9. Nockenwelle (1) nach einem der Ansprüche 1 bis 8, **dadurch gekennzeichnet, dass** die Nockenwelle (1) eine zweite Nabe (20) mit einer einen Kopfkreisdurchmesser (NDK2) und einen Fußkreisdurchmesser (NDF2) aufweisenden Innenverzahnung (8) umfasst und die Innenverzahnung (8) mit der Außenverzahnung (3) der Grundwelle (2) korreliert und einen Schiebesitz ausbildet.

10. Verfahren zur Herstellung einer gebauten Nockenwelle (1) gemäß einem der vorangegangenen Ansprüche 1 bis 5 umfassend folgende Verfahrensschritte:
- Bereitstellen einer Grundwelle (2),
- Oberflächenbearbeiten der Grundwelle (2) auf zumindest einem Teilbereich, zum Erzeugen der sich zumindest abschnittsweise axial entlang der Grundwelle (2) erstreckenden Außenverzahnung (3), welche für die zumindest eine Nabe (10) mit ihrer Innenverzahnung (8) wenigstens den Formschlussteilbereich (5) oder den Kraftschlussteilbereich (6) bereitstellt, um die Verbindung mit der Grundwelle (2) zu gewährleisten, wobei die Außenverzahnung (3) wenigstens zwei Zahnzwischenräume mit zueinander unterschiedlichen Fußkreisdurchmessern (DF_{Groß}, DF_{Klein}) aufweist, und
- Ausbilden des Ausrichtbereiches (7) auf der Grundwelle (2), wobei sich der Ausrichtbereich (6) zumindest an den Formschlussteilbereich oder den Kraftschlussteilbereich axial anschließt,
- Bereitstellen der Nabe (10) mit zumindest abschnittsweise in axialer Richtung verlaufender Innenverzahnung (8), welche mit der Außenverzahnung (3) der Grundwelle (2) korreliert und mindestens zwei Zähne mit zueinander unterschiedlichen Kopfkreisdurchmessern (DK_{Groß}, DK_{Klein}) aufweist, wobei der einen ersten Kopfkreisdurchmesser (DK_{Groß}) aufweisende Zahn größer ausgebildet ist als der einen zweite Kopfkreisdurchmesser (DK_{Klein}) aufweisende Zahn,
- Montieren der Nabe (10), wobei die Nabe (10) derart winkelausgerichtet auf die Außenverzahnung (3) der Grundwelle (2) aufgefädelt wird, dass die miteinander korrelierende Außenverzahnung (3) der Grundwelle (2) und die Innenverzahnung (8) der Nabe (10) einen Schiebesitz ausbilden,
- axiales Verschieben der Nabe (10) zumindest entlang des Formschlussteilbereiches (5) oder des Kraftschlussteilbereiches (6) der Grundwelle, bis die Innenverzahnung (8) der Nabe (10) in den Ausrichtbereich (7) eingeschoben ist,
- winkelgenaues Ausrichten der Nabe (10) derart relativ zur Außenverzahnung (3) der Grundwelle (2), dass zumindest eine Durchmesserpaarung bestehend aus dem einen ersten Fußkreisdurchmesser (WDF_{Groß}) aufweisenden Zahnzwischenraum der Außenverzahnung (3) und dem einen zweiten Kopfkreisdurchmesser (NDK_{Klein}) aufweisenden Zahn der Innenverzahnung (8) axial fluchtet,
- axiales Verschieben der Nabe (10) zumindest entlang des Formschlussteilbereiches (5) oder des Kraftschlussteilbereiches (6) der Grundwelle (2) bis zu deren Endposition, wobei aufgrund der vorhandenen Überdeckung zwischen dem einen ersten Fußkreisdurchmesser (WDF_{Groß}) aufweisenden Zahnzwischenraum der Außenverzahnung (3) der Grundwelle (2) und dem einen zweiten Kopfkreisdurchmesser (NDK_{Klein}) aufweisenden Zahn der Innenverzahnung (8) der Nabe (10) eine Pressverbindung zwischen der Grundwelle (2) und der Nabe (10) ausgebildet wird, wodurch die Nabe (10) gegen axiales Verschieben fixiert wird.

11. Verfahren zur Herstellung einer gebauten Nockenwelle (1) gemäß Anspruch 7 umfassend folgende Verfahrensschritte:
- Bereitstellen einer Grundwelle (2),
- Oberflächenbearbeiten der Grundwelle (2) auf zumindest einem Teilbereich, zum Erzeugen der sich zumindest abschnittsweise axial entlang der Grundwelle (2) erstreckenden Außenverzahnung (3), welche für die zumindest eine Nabe (10) mit ihrer Innenverzahnung (8) wenigstens den Formschlussteilbereich (5) oder den Kraftschlussteilbereich (6) bereitstellt, um die Verbindung mit der Grundwelle (2) zu gewährleisten, wobei die Außenverzahnung (3) zumindest einen Kopfkreisdurchmesser (WDK) aufweist, und Ausbilden des Ausrichtbereiches (7) auf der Grundwelle (2), wobei sich der Ausrichtbereich (7) axial zumindest an den Formschlussteilbereich (5) und/oder Kraftschlussteilbereich (6) anschließt,
- Bereitstellen der Nabe (10) mit einer zumindest abschnittsweise in axialer Richtung verlaufender Innenverzahnung (8), welche mit der Außenverzahnung (3) der Grundwelle (2) korreliert und mindestens zwei Zahnzwischenräume mit zueinander unterschiedlichen Fußkreisdurchmessern (NDF_{Groß}, NDF_{Klein}) aufweist, wobei der einen ersten Fußkreisdurchmesser (DK_{Groß}) aufweisende Zahnzwischenraum größer ausgebildet ist als der einen zweite Fußkreisdurchmesser (DK_{Klein}) aufweisende Zahnzwischenraum,
- Montieren der Nabe (10), wobei die Nabe (10) derart winkelausgerichtet auf die Außenverzahnung (3) der Grundwelle (2) aufgefädelt wird, dass die miteinander korrelierende Außenverzahnung (3) der Grundwelle (2) und die Innenverzahnung (8) mit dem einen ersten Fußkreisdurchmesser (DK_{Groß}) aufweisenden Zahnzwischenraum der Nabe (10) einen Schiebesitz ausbilden,
- axiales Verschieben der Nabe (10) entlang zumindest des Formschlussteilbereiches (5) oder des Kraftschlussteilbereiches (6) der Grundwelle, bis die Innenverzahnung (8) der Nabe (10) in den Ausrichtbereich (7) eingeschoben ist,
- winkelgenaues Ausrichten der Nabe (10) derart relativ zur Außenverzahnung (3) der Grundwelle (2), dass zumindest eine Durchmesserpaarung bestehend aus dem einen ersten Kopfkreisdurchmesser (NDK_{Groß}) aufweisenden Zahn der Außenverzahnung (3) der Grundwelle (2) und dem einen zweiten Fußkreisdurchmesser (NDF_{Klein}) aufweisenden Zahnzwischenraum der Innenverzahnung (8) der Nabe (10) axial fluchtet,
- axiales Verschieben der Nabe (10) zumindest entlang des Formschlussteilbereiches (5) oder des Kraftschlussteilbereiches (6) der Grundwelle (2) bis zu deren Endposition, wobei aufgrund der vorhandenen Überdeckung zwischen der einen Kopfkreisdurchmesser (WDK) aufweisenden Außenverzahnung (3) und dem einen zweiten Fußkreisdurchmesser (NDF_{Klein}) aufweisenden Zahnzwischenraum der Innenverzahnung (8) eine Pressverbindung zwischen Grundwelle (2) und Nabe (10) ausgebildet wird, wodurch die Nabe (10) gegen axiales Verschieben fixiert wird.

12. Verfahren zur Herstellung einer gebauten Nockenwelle (1) gemäß Anspruch 10 oder 11, **dadurch gekennzeichnet, dass** der Formschlussteilbereich (5) oder der Kraftschlussteilbereich (6) durch den Ausrichtbereich (7) in wenigstens zwei axial beabstandete Formschlussteilbereiche (5) oder Kraftschlussteilbereiche (6) aufgeteilt wird.

13. Verfahren zur Herstellung einer gebauten Nockenwelle (1) gemäß einem der Ansprüche 10 bis 12, **dadurch gekennzeichnet, dass** der Ausrichtbereich (7) durch Aussparungen in der Außenverzahnung (3), beispielsweise durch Fräsen oder Schleifen, ausgebildet wird.

14. Verfahren zur Herstellung einer gebauten Nockenwelle (1) gemäß einem der Ansprüche 10 bis 13, **dadurch gekennzeichnet, dass** auf die Nockenwelle (1) eine zweite Nabe (20) gefügt wird, wobei die zweite Nabe (20) einen Kopfkreisdurchmesser (NDK2) und einen Fußkreisdurchmesser (NDF2) aufweisende Innenverzahnung (8) umfasst und die Innenverzahnung (8) mit der Außenverzahnung (3) der Grundwelle (2) korreliert und einen Schiebesitz ausbildet.

## Claims

1. An assembled camshaft (1) for an internal combustion engine, wherein the camshaft (1) comprises a base shaft (2) and an external toothing (3) which extends at least in certain portions axially along the base shaft (2), and comprising at least one hub (10) with an internal toothing (8) which correlates with the external toothing (3) of the base shaft (2) such that the hub (10) is connected rotationally conjointly and axially non-displaceably to the base shaft (2), wherein the external toothing (3) has at least one form-fit subregion (5), which extends axially at least in certain portions along the base shaft (2), or one force-fit subregion (6) in order for the hub (10) to be arranged at least in a form-fitting or force-fitting manner, and wherein at least the form-fit subregion (5) or the force-fit subregion (6) is adjoined by at least one alignment region (7) which extends at least in certain portions axially along the base shaft (2) and which serves for the angular alignment of the hub (10), wherein the external toothing (3) at least of the one form-fit subregion (5) or of the force-fit subregion (6) comprises at least two tooth spaces which are formed between the teeth and which have mutually different root circle diameters (WDF_{large}, WDFₛₘₐₗₗ), and the internal toothing (8) of the hub (10) comprises at least two teeth which correlate with the different root circle diameters (WDF_{large}, WDFₛₘₐₗₗ) and which have mutually different tip circle diameters (NDK_{large}, NDKₛₘₐₗₗ), and wherein that tooth of the hub (10) which has a second tip circle diameter (NDKₛₘₐₗₗ) forms a sliding fit with that tooth space of the base shaft (2) which has a second root circle diameter (WDFₛₘₐₗₗ), and that tooth of the hub (10) which has a first tip circle diameter (NDK_{large}) forms a sliding fit with that tooth space of the base shaft (2) which has a first root circle diameter (WDF_{large}), and wherein at least the form-fit connection or the force-fit connection of the hub (10) to the base shaft (2) for the axial fixing of the hub (10) exists owing to an interference-fit connection formed between at least that tooth space of the external toothing (3) of the base shaft which has a first root circle diameter (WDF_{large}) and that non-correlating tooth of the internal toothing (8) of the hub (10) which has a second tip circle diameter (NDKₛₘₐₗₗ).

2. The camshaft (1) as claimed in claim 1, **characterized in that** the tooth spaces, which have at least two different root circle diameters (WDF_{large}, WDFₛₘₐₗₗ), of the external toothing (3) are formed in an encircling manner in an alternating sequence.

3. The camshaft (1) as claimed in claim 2, **characterized in that** the teeth, which have at least two different tip circle diameters (NDK_{large}, NDKₛₘₐₗₗ), of the internal toothing (8) of the hub (10) are formed in an encircling manner in an alternating sequence.

4. An assembled camshaft (1) for an internal combustion engine, wherein the camshaft (1) comprises a base shaft (2) and an external toothing (3) which extends at least in certain portions axially along the base shaft (2), and comprising at least one hub (10) with an internal toothing (8) which correlates with the external toothing (3) of the base shaft (2) such that the hub (10) is connected rotationally conjointly and axially non-displaceably to the base shaft (2), wherein the external toothing (3) has at least one form-fit subregion (5) or force-fit subregion (6) which extends at least in certain portions axially along the base shaft (2) in order for the hub (10) to be arranged at least in a form-fitting or force-fitting manner, wherein the external toothing (3) at least of the form-fit subregion (5) or of the force-fit subregion (6) has a tip circle diameter (WDK), and wherein at least the form-fit subregion (5) or the force-fit subregion (6) is adjoined by at least one alignment region (7) which extends at least in certain portions axially along the base shaft (2) and which serves for the angular alignment of the hub (10), and wherein the internal toothing (8) of the hub (10) comprises tooth spaces which have at least two different root circle diameters (NDF_{large}, NDFₛₘₐₗₗ), wherein that tooth space of the hub (10) which has a first root circle diameter NDF_{large} correlates and forms a sliding fit with that external toothing (3) of the base shaft (2) which has the tip circle diameter (WDK), and wherein at least the form-fit connection (5) or the force-fit connection (7) of the hub (10) to the base shaft (2) for the axial fixing of the hub (10) exists owing to an interference-fit connection formed between that external toothing (3) of the base shaft (2) which has the tip circle diameter (WDK) and those non-correlating tooth spaces of the internal toothing (8) which have second root circle diameters (NDFₛₘₐₗₗ).

5. The camshaft (1) as claimed in any of claims 1 to 4, **characterized in that** the form-fit subregion (5) and/or force-fit subregion (6) are/is divided by the alignment region (7) into at least two axially spaced-apart form-fit subregions (5) and/or force-fit subregions (6).

6. The camshaft (1) as claimed in any of claims 1 to 5, **characterized in that** multiple form-fit subregions (5) and/or force-fit subregions (6) and multiple alignment regions (7) extend in alternation in an axial direction along the base shaft (2).

7. The camshaft (1) as claimed in any of the preceding claims, **characterized in that** the internal toothing (8) of the hub (10) is divided with its axial extent into at least two subregions.

8. The camshaft (1) as claimed in any of claims 1 to 7, **characterized in that** the internal toothing (8) of the hub (10) has a greater number of teeth than the external toothing (3) of the base shaft (2).

9. The camshaft (1) as claimed in any of claims 1 to 8, **characterized in that** the camshaft (1) comprises a second hub (20) with an internal toothing (8) which has a tip circle diameter (NDK2) and a root circle diameter (NDF2), and the internal toothing (8) correlates and forms a sliding fit with the external toothing (7) of the base shaft (2).

10. A method for producing an assembled camshaft (1) as claimed in any of the preceding claims 1 to 5, comprising the following method steps:
- providing a base shaft (2),
- machining the surface of the base shaft (2) in at least one subregion in order to generate the external toothing (3) which extends at least in certain portions axially along the base shaft (2), which external toothing provides at least the form-fit subregion (5) or the force-fit subregion (6) for the at least one hub (10) with its internal toothing (8) in order to ensure the connection to the base shaft (2), wherein the external toothing (3) has at least two tooth spaces with mutually different root circle diameters (DF_{large}, DFₛₘₐₗₗ), and
- forming the alignment region (7) on the base shaft (2), wherein the alignment region (6) axially adjoins at least the form-fit subregion or the force-fit subregion,
- providing the hub (10) with internal toothing (8) running at least in certain portions in an axial direction, which internal toothing correlates with the external toothing (3) of the base shaft (2) and has at least two teeth with mutually different tip circle diameters (DK_{large}, DKₛₘₐₗₗ), wherein that tooth which has a first tip circle diameter (DK_{large}) is formed so as to be larger than that tooth which has a second tip circle diameter (DKₛₘₐₗₗ),
- installing the hub (10), wherein the hub (10) is threaded in an angularly aligned manner onto the external toothing (3) of the base shaft (2) such that the inter-correlating external toothing (3) of the base shaft (2) and the internal toothing (8) of the hub (10) form a sliding fit,
- axially displacing the hub (10) at least along the form-fit subregion (5) or the force-fit subregion (6) of the base shaft until the internal toothing (8) of the hub (10) has been pushed into the alignment region (7),
- angularly precisely aligning the hub (10) relative to the external toothing (3) of the base shaft (2) such that at least one diameter pairing composed of that tooth space of the external toothing (3) which has a first root circle diameter (WDF_{large}) and that tooth of the internal toothing (8) which has a second tip circle diameter (NDKₛₘₐₗₗ) is in axial alignment,
- axially displacing the hub (10) at least along the form-fit subregion (5) or the force-fit subregion (6) of the base shaft (2) as far as the end position thereof, wherein, owing to the overlap that exists between that tooth space of the external toothing (3) of the base shaft (2) which has a first root circle diameter (WDF_{large}) and that tooth of the internal toothing (8) of the hub (10) which has a second tip circle diameter (NDKₛₘₐₗₗ), an interference-fit connection is formed between the base shaft (2) and the hub (10), whereby the hub (10) is fixed against axial displacement.

11. A method for producing an assembled camshaft (1) as claimed in claim 7, comprising the following method steps:
- providing a base shaft (2),
- machining the surface of the base shaft (2) in at least one subregion in order to generate the external toothing (3) which extends at least in certain portions axially along the base shaft (2), which external toothing provides at least the form-fit subregion (5) or the force-fit subregion (6) for the at least one hub (10) with its internal toothing (8) in order to ensure the connection to the base shaft (2), wherein the external toothing (3) has at least one tip circle diameter (WDK), and forming the alignment region (7) on the base shaft (2), wherein the alignment region (7) axially adjoins at least the form-fit subregion (5) and/or force-fit subregion (6),
- providing the hub (10) with an internal toothing (8) running at least in certain portions in an axial direction, which internal toothing correlates with the external toothing (3) of the base shaft (2) and has at least two tooth spaces with mutually different root circle diameters (NDF_{large}, NDFₛₘₐₗₗ), wherein that tooth space which has a first root circle diameter (DK_{large}) is formed so as to be larger than that tooth space which has a second root circle diameter (DKₛₘₐₗₗ),
- installing the hub (10), wherein the hub (10) is threaded in an angularly aligned manner onto the external toothing (3) of the base shaft (2) such that the inter-correlating external toothing (3) of the base shaft (2) and that internal toothing (8) of the hub (10) which has the tooth space which has a first root circle diameter (DK_{large}) form a sliding fit,
- axially displacing the hub (10) along at least the form-fit subregion (5) or the force-fit subregion (6) of the base shaft until the internal toothing (8) of the hub (10) has been pushed into the alignment region (7),
- angularly precisely aligning the hub (10) relative to the external toothing (3) of the base shaft (2) such that at least one diameter pairing composed of that tooth of the external toothing (3) of the base shaft (2) which has a first tip circle diameter (NDK_{large}) and that tooth space of the internal toothing (8) of the hub (10) which has a second root circle diameter (NDFₛₘₐₗₗ) is in axial alignment,
- axially displacing the hub (10) at least along the form-fit subregion (5) or the force-fit subregion (6) of the base shaft (2) as far as the end position thereof, wherein, owing to the overlap that exists between that external toothing (3) which has a tip circle diameter (WDK) and that tooth space of the internal toothing (8) which has a second root circle diameter (NDFₛₘₐₗₗ), an interference-fit connection is formed between the base shaft (2) and the hub (10), whereby the hub (10) is fixed against axial displacement.

12. The method for producing an assembled camshaft (1) as claimed in claim 10 or 11, **characterized in that** the form-fit subregion (5) or the force-fit subregion (6) is divided by the alignment region (7) into at least two axially spaced-apart form-fit subregions (5) or force-fit subregions (6).

13. The method for producing an assembled camshaft (1) as claimed in any of claims 10 to 12, **characterized in that** the alignment region (7) is formed by cutouts in the external toothing (3), for example by milling or grinding.

14. The method for producing an assembled camshaft (1) as claimed in any of claims 10 to 13, **characterized in that** a second hub (20) is mounted onto the camshaft (1), wherein the second hub (20) comprises an internal toothing (8) which has a tip circle diameter (NDK2) and a root circle diameter (NDF2), and the internal toothing (8) correlates and forms a sliding fit with the external toothing (3) of the base shaft (2).

## Revendications

1. Arbre à cames assemblé (1) pour un moteur à combustion interne, l'arbre à cames (1) comprenant un arbre de base (2) et une denture extérieure (3) s'étendant au moins par sections axialement le long de l'arbre de base (2), ainsi qu'au moins un moyeu (10) avec une denture intérieure (8), qui est en corrélation avec la denture extérieure (3) de l'arbre de base (2) de telle sorte que le moyeu (10) est relié à l'arbre de base (2) de manière fixe en rotation et axialement non déplaçable, la denture extérieure (3) présentant au moins une zone partielle de complémentarité de forme (5) s'étendant axialement au moins par sections le long de l'arbre de base (2) ou une zone partielle de liaison à force (6), afin d'agencer le moyeu (10) au moins par complémentarité de forme ou par liaison à force, et au moins une zone d'orientation (7) pour l'orientation angulaire du moyeu (10), qui s'étend au moins par sections axialement le long de l'arbre de base (2), se raccordant au moins à la zone partielle à complémentarité de forme (5) ou à la zone partielle de liaison à force (6), la denture extérieure (3) au moins de la zone partielle à complémentarité de forme (5) ou de la zone partielle de liaison à force (6) comprenant au moins deux espaces interdentaires formés entre les dents avec des diamètres de cercle de pied différents l'un de l'autre (WDF_{Groß}, WDF_{Klein}) et la denture intérieure (8) du moyeu (10) comprenant au moins deux dents en corrélation avec les différents diamètres de cercle de pied (WDF_{Groß}, WDF_{Klein}) et présentant des diamètres de cercle de tête différents l'un de l'autre (NDK_{Groß}, NDK_{Klein}), et la dent du moyeu (10) présentant un deuxième diamètre de cercle de tête (NDK_{Klein}) formant un ajustement appuyé avec l'espace interdentaire de l'arbre de base (2) présentant un deuxième diamètre de cercle de pied (WDF_{Klein}), ainsi que la dent du moyeu (10) présentant un premier diamètre de cercle de tête (NDK_{Groß}) avec l'espace interdentaire de l'arbre de base (2) présentant un premier diamètre de cercle de pied (WDF_{Groß}), et au moins la liaison par complémentarité de forme ou la liaison à force du moyeu (10) avec l'arbre de base (2) pour la fixation axiale du moyeu (10) existant en raison d'une liaison par pression formée entre au moins l'espace interdentaire de la denture extérieure (3) de l'arbre de base présentant un premier diamètre de cercle de pied (WDF_{Groß}) et la dent de la denture intérieure (8) du moyeu (10) non corrélée présentant un deuxième diamètre de cercle de tête (NDK_{Klein}).

2. Arbre à cames (1) selon la revendication 1, **caractérisé en ce que** les au moins deux espaces interdentaires de la denture extérieure (3) présentant des diamètres de cercle de pied différents (WDF_{Groß}, WDF_{Klein}) sont formés en succession alternée l'un de l'autre sur la circonférence.

3. Arbre à cames (1) selon la revendication 2, **caractérisé en ce que** les au moins deux dents de la denture intérieure (8) du moyeu (10) présentant des diamètres de cercle de tête différents (NDK_{Groß}, ND_{Klein}), sont formées en succession alternée l'une de l'autre sur la circonférence.

4. Arbre à cames assemblé (1) pour un moteur à combustion interne, l'arbre à cames (1) comprenant un arbre de base (2) et une denture extérieure (3) s'étendant au moins par sections axialement le long de l'arbre de base (2), ainsi qu'au moins un moyeu (10) avec une denture intérieure (8) qui est en corrélation avec la denture extérieure (3) de l'arbre de base (2) de telle sorte que le moyeu (10) est relié à l'arbre de base (2) de manière fixe en rotation et axialement non déplaçable, la denture extérieure (3) présentant au moins une zone partielle à complémentarité de forme (5) ou zone partielle de liaison à force (6) s'étendant au moins par sections axialement le long de l'arbre de base (2), afin d'agencer le moyeu (10) au moins par complémentarité de forme ou à force, la denture extérieure (3) d'au moins la zone partielle à complémentarité de forme (5) ou la zone partielle de liaison à force (6) présentant un diamètre de cercle de tête (WDK), et au moins une zone d'orientation (7) pour l'orientation angulaire du moyeu (10), s'étendant au moins par sections axialement le long de l'arbre de base (2), se raccordant au moins à la zone partielle à complémentarité de forme (5) ou à la zone partielle de liaison à force (6), et la denture intérieure (8) du moyeu (10) comprenant au moins deux espaces interdentaires présentant des diamètres de cercle de pied différents (NDF_{Groß}, NDF_{Klein}), l'espace interdentaire du moyeu (10) présentant un premier diamètre de cercle de pied NDF_{Groß} étant en corrélation avec la denture extérieure (3) de l'arbre de base (2) présentant le diamètre de cercle de tête (WDK), et formant un ajustement appuyé, et au moins la liaison par complémentarité de forme (5) ou la liaison à force (6) du moyeu (10) avec l'arbre de base (2) pour la fixation axiale du moyeu (10) existant en raison d'une liaison par pression formée entre la denture extérieure (3) de l'arbre de base (2) présentant le diamètre de cercle de tête (WDK) et les espaces interdentaires de la denture intérieure (8) non corrélés présentant les deuxièmes diamètres de cercle de pied (NDF_{Klein}).

5. Arbre à cames (1) selon l'une quelconque des revendications 1 à 4, **caractérisé en ce que** la zone partielle à complémentarité de forme (5) et/ou la zone partielle de liaison à force (6) est/sont divisée(s) par la zone d'orientation (7) en au moins deux zones partielles à complémentarité de forme (5) et/ou zones partielles de liaison à force (6) espacées axialement.

6. Arbre à cames (1) selon l'une quelconque des revendications 1 à 5, **caractérisé en ce que** plusieurs zones partielles à complémentarité de forme (5) et/ou zones partielles de liaison à force (6) et plusieurs zones d'orientation (7) s'étendent en alternance les unes des autres dans la direction axiale le long de l'arbre de base (2).

7. Arbre à cames (1) selon l'une quelconque des revendications précédentes, **caractérisé en ce que** la denture intérieure (8) du moyeu (10) est divisée en au moins deux zones partielles avec son extension axiale.

8. Arbre à cames (1) selon l'une quelconque des revendications 1 à 7, **caractérisé en ce que** la denture intérieure (8) du moyeu (10) présente plus de dents que la denture extérieure (3) de l'arbre de base (2).

9. Arbre à cames (1) selon l'une quelconque des revendications 1 à 8, **caractérisé en ce que** l'arbre à cames (1) comprend un deuxième moyeu (20) avec une denture intérieure (8) présentant un diamètre de cercle de tête (NDK2) et un diamètre de cercle de pied (NDF2), et la denture intérieure (8) est en corrélation avec la denture extérieure (3) de l'arbre de base (2) et forme un ajustement appuyé.

10. Procédé de fabrication d'un arbre à cames assemblé (1) selon l'une quelconque des revendications 1 à 5 précédentes, comprenant les étapes de procédé suivantes :
- la fourniture d'un arbre de base (2),
- l'usinage en surface de l'arbre de base (2) sur au moins une zone partielle pour créer la denture extérieure (3) s'étendant au moins par sections axialement le long de l'arbre de base (2), qui fournit au moins la zone partielle à complémentarité de forme (5) ou la zone partielle de liaison à force (6) pour l'au moins un moyeu (10) avec sa denture intérieure (8) afin d'assurer la liaison avec l'arbre de base (2), la denture extérieure (3) présentant au moins deux espaces interdentaires avec des diamètres de cercle de pied différents l'un de l'autre (DF_{Groß}, DF_{Klein}), et
- la formation de la zone d'orientation (7) sur l'arbre de base (2), la zone d'orientation (6) se raccordant axialement au moins à la zone partielle à complémentarité de forme ou à la zone partielle de liaison à force,
- la fourniture du moyeu (10) avec une denture intérieure (8) s'étendant au moins par sections dans la direction axiale, qui est en corrélation avec la denture extérieure (3) de l'arbre de base (2) et qui présente au moins deux dents avec des diamètres de cercle de tête différents l'un de l'autre (DK_{Groß}, DK_{Klein}), la dent présentant un premier diamètre de cercle de tête (DK_{Groß}) étant formée plus grande que la dent présentant un deuxième diamètre de cercle de tête (DK_{Klein}),
- le montage du moyeu (10), le moyeu (10) étant enfilé sur la denture extérieure (3) de l'arbre de base (2) avec une orientation angulaire telle que la denture extérieure (3) de l'arbre de base (2) et la denture intérieure (8) du moyeu (10) en corrélation l'une avec l'autre forment un ajustement appuyé,
- le déplacement axial du moyeu (10) au moins le long de la zone partielle à complémentarité de forme (5) ou de la zone partielle de liaison à force (6) de l'arbre de base, jusqu'à ce que la denture intérieure (8) du moyeu (10) soit insérée dans la zone d'orientation (7),
- l'orientation angulaire précise du moyeu (10) par rapport à la denture extérieure (3) de l'arbre de base (2) de telle sorte qu'au moins un appariement de diamètres constitué de l'espace interdentaire de la denture extérieure (3) présentant un premier diamètre de cercle de pied (WDF_{Groß}) et de la dent de la denture intérieure (8) présentant un deuxième diamètre de cercle de tête (NDK_{Klein}) soit axialement aligné,
- le déplacement axial du moyeu (10) au moins le long de la zone partielle à complémentarité de forme (5) ou de la zone partielle de liaison à force (6) de l'arbre de base (2) jusqu'à sa position finale, une liaison par pression étant formée entre l'arbre de base (2) et le moyeu (10) en raison du recouvrement existant entre l'espace interdentaire de la denture extérieure (3) de l'arbre de base (2) présentant un premier diamètre de cercle de pied (WDF_{Groß}) et la dent de la denture intérieure (8) du moyeu (10) présentant un deuxième diamètre de cercle de tête (NDK_{Klein}), ce qui permet de fixer le moyeu (10) contre un déplacement axial.

11. Procédé de fabrication d'un arbre à cames assemblé (1) selon la revendication 7, comprenant les étapes suivantes :
- la fourniture d'un arbre de base (2),
- l'usinage en surface de l'arbre de base (2) sur au moins une zone partielle pour créer la denture extérieure (3) s'étendant au moins par sections axialement le long de l'arbre de base (2), qui fournit au moins la zone partielle à complémentarité de forme (5) ou la zone partielle de liaison à force (6) pour l'au moins un moyeu (10) avec sa denture intérieure (8), afin d'assurer la liaison avec l'arbre de base (2), la denture extérieure (3) présentant au moins un diamètre de cercle de tête (WDK), et la formation de la zone d'orientation (7) sur l'arbre de base (2), la zone d'orientation (7) se raccordant axialement au moins à la zone partielle à complémentarité de forme (5) et/ou à la zone partielle de liaison à force (6),
- la fourniture du moyeu (10) avec une denture intérieure (8) s'étendant au moins par sections dans la direction axiale, qui est en corrélation avec la denture extérieure (3) de l'arbre de base (2) et qui présente au moins deux espaces interdentaires avec des diamètres de cercle de pied différents l'un de l'autre (NDF_{Groß}, NDF_{Klein}), l'espace interdentaire présentant un premier diamètre de cercle de pied (DK_{Groß}) étant formé plus grand que l'espace interdentaire présentant un deuxième diamètre de cercle de pied (DK_{Klein}),
- le montage du moyeu (10), le moyeu (10) étant enfilé sur la denture extérieure (3) de l'arbre de base (2) avec une orientation angulaire telle que la denture extérieure (3) de l'arbre de base (2) et la denture intérieure (8) en corrélation l'une avec l'autre forment un ajustement appuyé avec l'espace interdentaire du moyeu (10) présentant un premier diamètre de cercle de pied (DK_{Groß}),
- le déplacement axial du moyeu (10) le long d'au moins la zone partielle à complémentarité de forme (5) ou la zone partielle de liaison à force (6) de l'arbre de base, jusqu'à ce que la denture intérieure (8) du moyeu (10) soit insérée dans la zone d'orientation (7),
- l'orientation angulaire précise du moyeu (10) par rapport à la denture extérieure (3) de l'arbre de base (2) de telle sorte qu'au moins un appariement de diamètres constitué de la dent de la denture extérieure (3) de l'arbre de base (2) présentant un premier diamètre de cercle de tête (NDK_{Groß}) et de l'espace interdentaire de la denture intérieure (8) du moyeu (10) présentant un deuxième diamètre de cercle de pied (NDF_{Klein}) soit aligné axialement,
- le déplacement axial du moyeu (10) au moins le long de la zone partielle à complémentarité de forme (5) ou de la zone partielle de liaison à force (6) de l'arbre de base (2) jusqu'à sa position finale, une liaison par pression étant formée entre l'arbre de base (2) et le moyeu (10) en raison du recouvrement existant entre la denture extérieure (3) présentant un diamètre de cercle de tête (WDK) et l'espace interdentaire de la denture intérieure (8) présentant un deuxième diamètre de cercle de pied (NDF_{Klein}), ce qui permet de fixer le moyeu (10) contre un déplacement axial.

12. ˙˙Procédé de fabrication d'un arbre à cames assemblé (1) selon la revendication 10 ou 11, **caractérisé en ce que** la zone partielle à complémentarité de forme (5) ou la zone partielle de liaison à force (6) est divisée par la zone d'orientation (7) en au moins deux zones partielles à complémentarité de forme (5) ou zones partielles de liaison à force (6) espacées axialement.

13. Procédé de fabrication d'un arbre à cames assemblé (1) selon l'une quelconque des revendications 10 à 12, **caractérisé en ce que** la zone d'orientation (7) est formée par des évidements dans la denture extérieure (3), par exemple par fraisage ou meulage.

14. Procédé de fabrication d'un arbre à cames assemblé (1) selon l'une quelconque des revendications 10 à 13, **caractérisé en ce qu'**un deuxième moyeu (20) est joint sur l'arbre à cames (1), le deuxième moyeu (20) comprenant une denture intérieure (8) présentant un diamètre de cercle de tête (NDK2) et un diamètre de cercle de pied (NDF2), et la denture intérieure (8) étant en corrélation avec la denture extérieure (3) de l'arbre de base (2) et formant un ajustement appuyé.
